# EUROPEAN PATENT APPLICATION

(11) **EP 4 672 853 A1**
(43) Date of publication of application: **31.12.2025**
(21) Application number: 24769777.4
(22) Date of filing: 04.03.2024
(51) Int. Cl.: H04W 76/11, H04W 40/12, H04W 8/26

(54) **COMMUNICATION METHOD, COMMUNICATION APPARATUS AND COMMUNICATION SYSTEM**

(30) Priority: 13.03.2023 CN 202310265384
(71) Applicant: Huawei Technologies Co., Ltd., Shenzhen, Guangdong 518129 (CN)
(72) Inventor: LIN, Yousi, Shenzhen, Guangdong 518129 (CN); GUO, Yuchen, Shenzhen, Guangdong 518129 (CN); HUANG, Guogang, Shenzhen, Guangdong 518129 (CN); LI, Yunbo, Shenzhen, Guangdong 518129 (CN)
(74) Representative: Isarpatent
(86) International application number: PCT/CN2024/079865
(87) International publication number: WO 2024/188083

(57) **Abstract**

This application provides a communication method, a communication apparatus, and a communication system. In the method, when a non-access point multi-link device establishes a connection to a collocated access point multi-link device in a non-collocated access point multi-link device, the collocated access point multi-link device that is requested to establish the connection allocates an association identifier to the non-access point multi-link device, and the allocated association identifier has not been allocated by the collocated access point multi-link device before. This can avoid repetition of association identifiers of different non-access point multi-link devices accessed by a same collocated access point multi-link device, thereby implementing proper management of the non-access point multi-link devices. This application may be applied to wireless local area network systems of 802.11 series protocols such as a next-generation Wi-Fi protocol of IEEE 802.11be, Wi-Fi 8, and Wi-Fi AI, and may be further applied to a wireless personal area network system that is based on ultra-wideband UWB, a sensing sensing system, and the like.

## Description

### CROSS-REFERENCE TO RELATED APPLICATIONS

This application claims priority to Chinese Patent Application No. 202310265384.9, filed with the China National Intellectual Property Administration on March 13, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

A non-collocated (non-collocated) access point multi-link device (access point multi-link device, AP MLD) is a logical device. The non-collocated AP MLD includes n collocated AP MLDs, where n is an integer greater than or equal to 2. "Non-collocated" herein means that physical locations of the n collocated AP MLDs are different from each other. Each collocated AP MLD is one physical entity device, and each collocated AP MLD corresponds to one physical location. Each collocated AP MLD includes two or more links.

The non-collocated AP MLD may provide a wireless network access service for a non-AP MLD (non-AP MLD). When the non-AP MLD accesses the non-collocated AP MLD, a problem of managing the non-AP MLD, that is, how to identify the non-AP MLD, is involved.

### SUMMARY

Embodiments of this application provide a communication method, a communication apparatus, and a communication system, to properly manage a non-access point multi-link device that accesses a non-collocated access point multi-link device.

According to a first aspect, an embodiment of this application provides a communication method. The method may be performed by a non-access point multi-link device or a module (such as a chip) used in the non-access point multi-link device. An example in which the non-access point multi-link device performs the method is used. The method includes: The non-access point multi-link device sends a first request message to a first collocated access point multi-link device in a non-collocated access point multi-link device, where the first request message includes identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; and the non-access point multi-link device receives a first response message, where the first response message includes a first association identifier allocated by the second collocated access point multi-link device to the non-access point multi-link device.

In the foregoing solution, when the non-access point multi-link device establishes a connection to a collocated access point multi-link device in the non-collocated access point multi-link device, the collocated access point multi-link device that is requested to establish the connection allocates an association identifier to the non-access point multi-link device, and the allocated association identifier has not been allocated by the collocated access point multi-link device before. This can avoid repetition of association identifiers of different non-access point multi-link devices accessed by a same collocated access point multi-link device, thereby implementing proper management of the non-access point multi-link devices.

In a possible implementation method, that the non-access point multi-link device receives the first response message includes: The non-access point multi-link device receives the first response message from the first collocated access point multi-link device; or the non-access point multi-link device receives the first response message from the second collocated access point multi-link device.

In the foregoing solution, the non-access point may receive, from the first collocated access point multi-link device, the first response message carrying the first association identifier, or may receive, from the second collocated access point multi-link device, the first response message carrying the first association identifier, thereby increasing solution flexibility.

In a possible implementation method, the first request message is a multi-link reconfiguration request message, and the first response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In the foregoing solution, the existing multi-link reconfiguration request message is reused to carry the first association identifier, which has little change to a protocol and can reduce signaling overheads.

In a possible implementation method, the first association identifier has not been allocated by the second collocated access point multi-link device before.

The foregoing solution can avoid repetition of association identifiers of different non-access point multi-link devices accessed by a same collocated access point multi-link device, thereby implementing proper management of the non-access point multi-link devices.

In a possible implementation method, the first request message further includes identification information of the first collocated access point multi-link device and identification information of a second link in the first collocated access point multi-link device, the first request message is further used to request to establish the second link, and the second link is a link between the non-access point multi-link device and the first collocated access point multi-link device.

In the foregoing solution, the first request message may simultaneously request to establish connections to a plurality of collocated access point multi-link devices, thereby improving connection establishment efficiency.

In a possible implementation method, that the non-access point multi-link device receives the first response message includes: The non-access point multi-link device receives the first response message from the first collocated access point multi-link device, where the first response message further includes a second association identifier allocated by the first collocated access point multi-link device to the non-access point multi-link device, and the second association identifier has not been allocated by the first collocated access point multi-link device before.

In the foregoing solution, a same response message carries association identifiers respectively allocated by a plurality of collocated access point multi-link devices, so that signaling overheads can be reduced.

In a possible implementation method, the first request message is an association request message, and the first response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In the foregoing solution, the existing association request message is reused to carry the first association identifier and the second association identifier, which has little change to a protocol and can reduce signaling overheads.

In a possible implementation method, that the non-access point multi-link device receives the first response message includes: The non-access point multi-link device receives the first response message from the second collocated access point multi-link device.

In the foregoing solution, a collocated access point multi-link device that allocates an association identifier sends the allocated association identifier to the non-access point multi-link device, so that the association identifier can be correctly sent.

In a possible implementation method, the method further includes: The non-access point multi-link device receives a second response message from the first collocated access point multi-link device, where the second response message includes a second association identifier allocated by the first collocated access point multi-link device to the non-access point multi-link device, and the second association identifier has not been allocated by the first collocated access point multi-link device before.

In the foregoing solution, a collocated access point multi-link device that allocates an association identifier sends the allocated association identifier to the non-access point multi-link device, so that the association identifier can be correctly sent.

In a possible implementation method, the first request message further includes identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

In the foregoing solution, the first request message may simultaneously request to establish connections to a plurality of collocated access point multi-link devices, thereby improving connection establishment efficiency.

In a possible implementation method, that the non-access point multi-link device receives the first response message includes: The non-access point multi-link device receives the first response message from the first collocated access point multi-link device, where the first response message further includes a third association identifier allocated by the third collocated access point multi-link device to the non-access point multi-link device, and the third association identifier has not been allocated by the third collocated access point multi-link device before.

In the foregoing solution, a same response message carries association identifiers respectively allocated by a plurality of collocated access point multi-link devices, so that signaling overheads can be reduced.

In a possible implementation method, the first request message is a multi-link reconfiguration request message, and the first response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

In the foregoing solution, the existing multi-link reconfiguration request message is reused to carry the first association identifier and the third association identifier, which has little change to a protocol and can reduce signaling overheads.

In a possible implementation method, that the non-access point multi-link device receives the first response message includes: The non-access point multi-link device receives the first response message from the second collocated access point multi-link device.

In the foregoing solution, a collocated access point multi-link device that allocates an association identifier sends the allocated association identifier to the non-access point multi-link device, so that the association identifier can be correctly sent.

In a possible implementation method, the method further includes: The non-access point multi-link device receives a third response message from the third collocated access point multi-link device, where the third response message includes a third association identifier allocated by the third collocated access point multi-link device to the non-access point multi-link device, and the third association identifier has not been allocated by the third collocated access point multi-link device before.

In the foregoing solution, a collocated access point multi-link device that allocates an association identifier sends the allocated association identifier to the non-access point multi-link device, so that the association identifier can be correctly sent.

According to a second aspect, an embodiment of this application provides a communication method. The method may be performed by a first collocated access point multi-link device or a module (such as a chip) used in the first collocated access point multi-link device. An example in which the first collocated access point multi-link device performs the method is used. The method includes: The first collocated access point multi-link device in a non-collocated access point multi-link device receives a first request message from a non-access point multi-link device, where the first request message includes identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; the first collocated access point multi-link device sends a second request message to the second collocated access point multi-link device, where the second request message includes identification information of the non-access point multi-link device, the identification information of the second collocated access point multi-link device, and the identification information of the first link, and the second request message is used to request to allocate an association identifier to the non-access point multi-link device; the first collocated access point multi-link device receives a first association identifier allocated by the second collocated access point multi-link device to the non-access point multi-link device; and the first collocated access point multi-link device sends a first response message to the non-access point multi-link device, where the first response message includes the first association identifier.

In the foregoing solution, when the non-access point multi-link device establishes a connection to a collocated access point multi-link device in the non-collocated access point multi-link device, the collocated access point multi-link device that is requested to establish the connection allocates an association identifier to the non-access point multi-link device, and the allocated association identifier has not been allocated by the collocated access point multi-link device before. This can avoid repetition of association identifiers of different non-access point multi-link devices accessed by a same collocated access point multi-link device, thereby implementing proper management of the non-access point multi-link devices.

In a possible implementation method, that the first collocated access point multi-link device sends the second request message to the second collocated access point multi-link device includes: The first collocated access point multi-link device sends the second request message to the second collocated access point multi-link device through an access point multi-link device medium access control layer in the non-collocated access point multi-link device.

In a possible implementation method, the first association identifier has not been allocated by the second collocated access point multi-link device before.

The foregoing solution can avoid repetition of association identifiers of different non-access point multi-link devices accessed by a same collocated access point multi-link device, thereby implementing proper management of the non-access point multi-link devices.

In a possible implementation method, the first request message is a multi-link reconfiguration request message, and the first response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In the foregoing solution, the existing multi-link reconfiguration request message is reused to carry the first association identifier, which has little change to a protocol and can reduce signaling overheads.

In a possible implementation method, the first request message further includes identification information of the first collocated access point multi-link device and identification information of a second link in the first collocated access point multi-link device, the first request message is further used to request to establish the second link, and the second link is a link between the non-access point multi-link device and the first collocated access point multi-link device.

In the foregoing solution, the first request message may simultaneously request to establish connections to a plurality of collocated access point multi-link devices, thereby improving connection establishment efficiency.

In a possible implementation method, the method further includes: The first collocated access point multi-link device allocates a second association identifier to the non-access point multi-link device, where the second association identifier has not been allocated by the first collocated access point multi-link device before, where the first response message further includes the second association identifier.

In the foregoing solution, a same response message carries association identifiers respectively allocated by a plurality of collocated access point multi-link devices, so that signaling overheads can be reduced.

In a possible implementation method, the first request message is an association request message, and the first response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In the foregoing solution, the existing association request message is reused to carry the first association identifier and the second association identifier, which has little change to a protocol and can reduce signaling overheads.

In a possible implementation method, the first request message further includes identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

In the foregoing solution, the first request message may simultaneously request to establish connections to a plurality of collocated access point multi-link devices, thereby improving connection establishment efficiency.

In a possible implementation method, the method further includes: The first collocated access point multi-link device sends a third request message to the third collocated access point multi-link device, where the third request message includes the identification information of the non-access point multi-link device, the identification information of the third collocated access point multi-link device, and the identification information of the third link, and the third request message is used to request to allocate an association identifier to the non-access point multi-link device; and the first collocated access point multi-link device receives a third association identifier allocated by the third collocated access point multi-link device to the non-access point multi-link device, where the first response message further includes the third association identifier.

In the foregoing solution, a same response message carries association identifiers respectively allocated by a plurality of collocated access point multi-link devices, so that signaling overheads can be reduced.

In a possible implementation method, the first request message is a multi-link reconfiguration request message, and the first response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

In the foregoing solution, the existing multi-link reconfiguration request message is reused to carry the first association identifier and the third association identifier, which has little change to a protocol and can reduce signaling overheads.

According to a third aspect, an embodiment of this application provides a communication method. The method may be performed by a second collocated access point multi-link device or a module (such as a chip) used in the second collocated access point multi-link device. An example in which the second collocated access point multi-link device performs the method is used. The method includes: The second collocated access point multi-link device in a non-collocated access point multi-link device receives a second request message from a first collocated access point multi-link device in the non-collocated access point multi-link device, where the second request message includes identification information of a non-access point multi-link device, identification information of the second collocated access point multi-link device, and identification information of a first link in the second collocated access point multi-link device, and the second request message is used to request to allocate an association identifier to the non-access point multi-link device; the second collocated access point multi-link device allocates a first association identifier to the non-access point multi-link device; and the second collocated access point multi-link device sends the first association identifier to the non-access point multi-link device or the first collocated access point multi-link device.

In the foregoing solution, when the non-access point multi-link device establishes a connection to a collocated access point multi-link device in the non-collocated access point multi-link device, the collocated access point multi-link device that is requested to establish the connection allocates an association identifier to the non-access point multi-link device, and the allocated association identifier has not been allocated by the collocated access point multi-link device before. This can avoid repetition of association identifiers of different non-access point multi-link devices accessed by a same collocated access point multi-link device, thereby implementing proper management of the non-access point multi-link devices.

According to a fourth aspect, an embodiment of this application provides a communication method. The method may be performed by a non-collocated access point multi-link device or a module (such as a chip) used in the non-collocated access point multi-link device. An example in which the non-collocated access point multi-link device performs the method is used. The method includes: The non-collocated access point multi-link device receives a request message from a non-access point multi-link device through a first collocated access point multi-link device in the non-collocated access point multi-link device, where the request message includes identification information of a second collocated access point multi-link device in the non-collocated access point multi-link device and identification information of a first link in the second collocated access point multi-link device, the request message is used to request to establish the first link, and the first link is a link between the non-access point multi-link device and the second collocated access point multi-link device; the non-collocated access point multi-link device allocates a first association identifier to the non-access point multi-link device, where the first association identifier is used by the second collocated access point multi-link device to uniquely identify the non-access point multi-link device; and the non-collocated access point multi-link device sends a response message to the non-access point multi-link device, where the response message includes the first association identifier.

In the foregoing solution, when the non-access point multi-link device establishes a connection to one or more collocated access point multi-link devices in the non-collocated access point multi-link device, the non-collocated access point multi-link device allocates an association identifier to the non-access point multi-link device, and the allocated association identifier has not been allocated before by the collocated access point multi-link device to which the non-access point multi-link device requests to establish the connection. This can avoid repetition of association identifiers of different non-access point multi-link devices accessed by a same collocated access point multi-link device, thereby implementing proper management of the non-access point multi-link devices.

In a possible implementation method, the request message is a multi-link reconfiguration request message, and the response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In the foregoing solution, the existing multi-link reconfiguration request message is reused to carry the first association identifier, which has little change to a protocol and can reduce signaling overheads.

In a possible implementation method, the first association identifier has not been allocated by the second collocated access point multi-link device before.

The foregoing solution can avoid repetition of association identifiers of different non-access point multi-link devices accessed by a same collocated access point multi-link device, thereby implementing proper management of the non-access point multi-link devices.

In a possible implementation method, the request message further includes identification information of the first collocated access point multi-link device and identification information of a second link in the first collocated access point multi-link device, the request message is further used to request to establish the second link, and the second link is a link between the non-access point multi-link device and the first collocated access point multi-link device.

In the foregoing solution, the request message may simultaneously request to establish connections to a plurality of collocated access point multi-link devices, thereby improving connection establishment efficiency.

In a possible implementation method, the method further includes: The non-collocated access point multi-link device allocates a second association identifier to the non-access point multi-link device, where the second association identifier is used by the first collocated access point multi-link device to uniquely identify the non-access point multi-link device, and the second association identifier has not been allocated by the first collocated access point multi-link device before, where the response message further includes the second association identifier.

In the foregoing solution, a same response message carries association identifiers respectively allocated by a plurality of collocated access point multi-link devices, so that signaling overheads can be reduced.

In a possible implementation method, the request message is an association request message, and the response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In the foregoing solution, the existing association request message is reused to carry the first association identifier and the second association identifier, which has little change to a protocol and can reduce signaling overheads.

In a possible implementation method, the first association identifier is further used by the first collocated access point multi-link device to uniquely identify the non-access point multi-link device.

In the foregoing solution, when the non-access point multi-link device simultaneously requests to establish connections to a plurality of collocated access point multi-link devices, the first association identifier allocated by the non-collocated access point multi-link device to the non-access point multi-link device may be used by the plurality of collocated access point multi-link devices to uniquely identify the non-access point multi-link device. This can simplify an association identifier allocation process.

In a possible implementation method, the first association identifier has not been allocated by the first collocated access point multi-link device before; or the first association identifier has not been allocated by any collocated access point multi-link device in the non-collocated access point multi-link device before.

In a possible implementation method, the request message further includes identification information of a third collocated access point multi-link device in the non-collocated access point multi-link device and identification information of a third link in the third collocated access point multi-link device, the request message is further used to request to establish the third link, and the third link is a link between the non-access point multi-link device and the third collocated access point multi-link device.

In the foregoing solution, the request message may simultaneously request to establish connections to a plurality of collocated access point multi-link devices, thereby improving connection establishment efficiency.

In a possible implementation method, the method further includes: The non-collocated access point multi-link device allocates a third association identifier to the non-access point multi-link device, where the third association identifier is used by the third collocated access point multi-link device to uniquely identify the non-access point multi-link device, and the third association identifier has not been allocated by the third collocated access point multi-link device before, where the response message further includes the third association identifier.

In the foregoing solution, a same response message carries association identifiers respectively allocated by a plurality of collocated access point multi-link devices, so that signaling overheads can be reduced.

In a possible implementation method, the request message is a multi-link reconfiguration request message, and the response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

In the foregoing solution, the existing multi-link reconfiguration request message is reused to carry the first association identifier and the third association identifier, which has little change to a protocol and can reduce signaling overheads.

In a possible implementation method, the first association identifier is further used by the third collocated access point multi-link device to uniquely identify the non-access point multi-link device.

In the foregoing solution, when the non-access point multi-link device simultaneously requests to establish connections to a plurality of collocated access point multi-link devices, the first association identifier allocated by the non-collocated access point multi-link device to the non-access point multi-link device may be used by the plurality of collocated access point multi-link devices to uniquely identify the non-access point multi-link device. This can simplify an association identifier allocation process.

In a possible implementation method, the first association identifier has not been allocated by the third collocated access point multi-link device before; or the first association identifier has not been allocated by any collocated access point multi-link device in the non-collocated access point multi-link device before.

According to a fifth aspect, an embodiment of this application provides a communication apparatus. The apparatus may be a non-access point multi-link device or a module (such as a chip) used in the non-access point multi-link device. The apparatus has a function of implementing any implementation method of the first aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a first collocated access point multi-link device or a module (such as a chip) used in the first collocated access point multi-link device. The apparatus has a function of implementing any implementation method of the second aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a second collocated access point multi-link device or a module (such as a chip) used in the second collocated access point multi-link device. The apparatus has a function of implementing any implementation method of the third aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a non-collocated access point multi-link device or a module (such as a chip) used in the non-collocated access point multi-link device. The apparatus has a function of implementing any implementation method of the fourth aspect. The function may be implemented by hardware, or may be implemented by hardware executing corresponding software. The hardware or the software includes one or more modules corresponding to the function.

According to a ninth aspect, an embodiment of this application provides a communication apparatus, including units or means (means) configured to perform steps of any implementation method in the first aspect to the fourth aspect.

According to a tenth aspect, an embodiment of this application provides a communication apparatus, including a processor and an interface circuit. The processor is configured to: communicate with another apparatus through the interface circuit, and perform any implementation method in the first aspect to the fourth aspect. There are one or more processors.

According to an eleventh aspect, an embodiment of this application provides a communication apparatus, including a processor coupled to a memory. The processor is configured to invoke a program stored in the memory, to perform any implementation method in the first aspect to the fourth aspect. The memory may be located inside or outside the apparatus. In addition, there may be one or more processors.

According to a twelfth aspect, an embodiment of this application provides a communication apparatus, including a processor and a memory. The memory is configured to store computer instructions, and when the apparatus runs, the processor executes the computer instructions stored in the memory, to enable the apparatus to perform any implementation method in the first aspect to the fourth aspect.

According to a thirteenth aspect, an embodiment of this application further provides a computer program product. The computer program product includes a computer program or instructions, and when the computer program or the instructions are run on a communication apparatus, any implementation method in the first aspect to the fourth aspect is performed.

According to a fourteenth aspect, an embodiment of this application further provides a computer-readable storage medium. The computer-readable storage medium stores instructions, and when the instructions are run on a communication apparatus, any implementation method in the first aspect to the fourth aspect is performed.

According to a fifteenth aspect, an embodiment of this application further provides a chip system, including a processor, configured to perform any implementation method in the first aspect to the fourth aspect.

According to a sixteenth aspect, an embodiment of this application further provides a communication system. The communication system includes a first collocated access point multi-link device configured to perform any implementation method in the second aspect, and a second collocated access point multi-link device configured to perform the implementation method in the third aspect.

According to a seventeenth aspect, an embodiment of this application further provides a communication method. The method includes: A first collocated access point multi-link device in a non-collocated access point multi-link device receives a first request message from a non-access point multi-link device, where the first request message includes identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; the first collocated access point multi-link device sends a second request message to the second collocated access point multi-link device, where the second request message includes identification information of the non-access point multi-link device, the identification information of the second collocated access point multi-link device, and the identification information of the first link, and the second request message is used to request to allocate an association identifier to the non-access point multi-link device; the second collocated access point multi-link device allocates a first association identifier to the non-access point multi-link device; the second collocated access point multi-link device sends the first association identifier to the first collocated access point multi-link device, where the first association identifier has not been allocated by the second collocated access point multi-link device before; and the first collocated access point multi-link device sends a first response message to the non-access point multi-link device, where the first response message includes the first association identifier.

### BRIEF DESCRIPTION OF DRAWINGS

FIG. 1 is a diagram of a non-collocated AP MLD according to an embodiment of this application;
FIG. 2(a) is an example diagram of establishing a connection between a non-AP MLD and a collocated AP MLD according to an embodiment of this application;
FIG. 2(b) is another example diagram of establishing a connection between a non-AP MLD and a collocated AP MLD according to an embodiment of this application;
FIG. 2(c) is another example diagram of establishing a connection between a non-AP MLD and a collocated AP MLD according to an embodiment of this application;
FIG. 3(a) is another example diagram of establishing a connection between a non-AP MLD and a collocated AP MLD according to an embodiment of this application;
FIG. 3(b) is another example diagram of establishing a connection between a non-AP MLD and a collocated AP MLD according to an embodiment of this application;
FIG. 4(a) is a schematic flowchart of a communication method according to an embodiment of this application;
FIG. 4(b) is a schematic flowchart of a communication method according to an embodiment of this application;
FIG. 5 is a schematic flowchart of a communication method according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

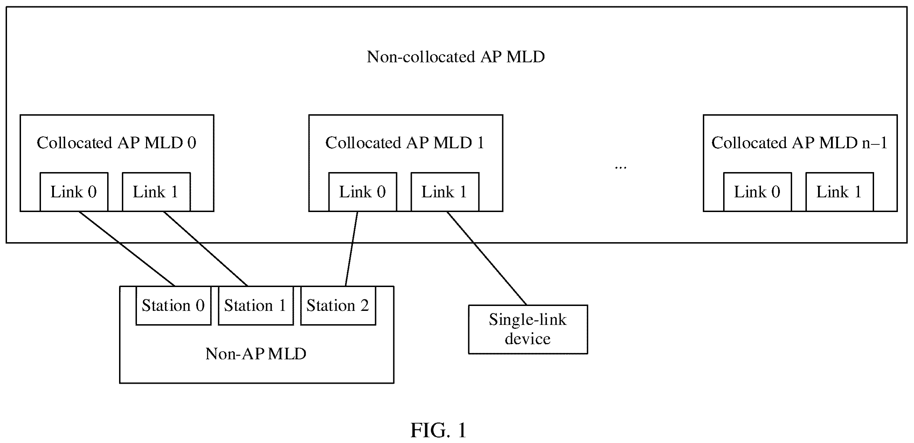

FIG. 1 is a diagram of a non-collocated AP MLD according to an embodiment of this application. The non-collocated (non-collocated) AP MLD is a logical device. The non-collocated AP MLD includes n collocated AP MLDs, where n is an integer greater than or equal to 2. "Non-collocated" herein means that physical locations of the n collocated AP MLDs are different from each other. Each collocated AP MLD is one physical entity device, and each collocated AP MLD corresponds to one physical location. Each collocated AP MLD includes two or more links. In FIG. 1, an example in which each collocated AP MLD includes two links (that is, a link 0 and a link 1) is used.

The non-collocated AP MLD may provide a wireless network access service for one or more non-AP MLDs, or may provide a wireless network access service for one or more single-link devices.

Any two collocated AP MLDs in the non-collocated AP MLD may be wiredly connected (such as via an optical fiber) by using a backhaul (backhaul) link or wirelessly connected by using a wireless link, or a physical entity or a logical entity may be added to the non-collocated AP MLD, so that forwarding communication is performed between different collocated AP MLDs by using the added physical entity or logical entity. The added physical entity may be a collocated AP MLD or another device specially used for forwarding communication, and the logical entity may be an AP MLD medium access control (medium access control, MAC) layer or another type of layer. For ease of description, an example in which the logical entity is an AP MLD MAC layer is subsequently used for description in this application. In addition, a name of the AP MLD MAC layer is not limited in this application, and may have another name.

In an implementation method, the n collocated AP MLDs in the non-collocated AP MLD share the AP MLD MAC layer.

In another implementation method, the n collocated AP MLDs in the non-collocated AP MLD share the AP MLD MAC layer (the AP MLD MAC layer is also referred to as an AP MLD upper MAC layer), and one AP MLD MAC layer (the AP MLD MAC layer is also referred to as an AP MLD lower MAC layer) is further disposed in each of the n collocated AP MLDs.

In this embodiment of this application, the collocated AP MLD is a device such as a wireless hub or a router that is configured to provide a wireless network access service, and may be used as an access point for a non-AP MLD or a single-link device to access a wired Ethernet backbone. The collocated AP MLD may be easily installed on a ceiling or wall to provide large-scale signal coverage in an open space. The collocated AP MLD may operate on two or more frequency bands, which specifically include, for example, 1 GHz, 2.4 GHz, 5 GHz, 6 GHz, and 60 GHz. Two or more links (link) are configured in the collocated AP MLD, and each link supports one frequency band. A collocated AP MLD 0 shown in FIG. 1 is used as an example. Two links: a link 0 and a link 1 are configured on the collocated AP MLD 0. For example, the link 0 supports 1 GHz, and the link 1 supports 2.4 GHz. A plurality of links on the collocated AP MLD may operate at the same time, thereby improving a throughput of data received and sent by the collocated AP MLD.

The non-AP MLD is a device that has a wireless transceiver function. The non-AP MLD may operate on two or more frequency bands, which specifically include, for example, 1 GHz, 2.4 GHz, 5 GHz, 6 GHz, and 60 GHz. Two or more stations (STA) are configured in the non-AP MLD. Each station supports one frequency band, and different stations support different frequency bands. A non-AP MLD shown in FIG. 1 is used as an example. Three stations: a station 0, a station 1, and a station 2 are configured on the non-AP MLD. For example, the station 0 supports 1 GHz, the station 1 supports 2.4 GHz, and the station 2 supports 5 GHz. A plurality of stations on the non-AP MLD may operate at the same time, thereby improving a throughput of data received and sent by the non-AP MLD. The non-AP MLD may be a terminal device, user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. During specific application, the non-AP MLD may be a cellular phone, a mobile phone (mobile phone), a tablet computer (pad), a wearable device, a smart point of sale (point of sale, POS) machine, customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self-driving (self-driving), a terminal device in telemedicine (remote medical), a terminal device in smart grid (smart grid), a terminal device in smart city (smart city), a terminal device in smart home (smart home), or the like.

The single-link device is also referred to as a station. The single-link device is a device that has a wireless transceiver function, and supports one frequency band. A specific example of the single-link device is similar to that of the non-AP MLD, and details are not described. A difference between the single-link device and the non-AP MLD lies in that the single-link device supports only one frequency band, while the non-AP MLD supports a plurality of frequency bands and may operate on the plurality of frequency bands at the same time.

For one non-AP MLD, the non-AP MLD may access one collocated AP MLD by using one or more stations in the non-AP MLD, or may access a plurality of collocated AP MLDs by using a plurality of stations. Using FIG. 1 as an example, three stations are configured on the non-AP MLD. The non-AP MLD accesses the link 0 of the collocated AP MLD 0 by using the station 1, accesses the link 1 of the collocated AP MLD 0 by using the station 1, and accesses a link 0 of a collocated AP MLD 1 by using the station 2. Therefore, the non-AP MLD accesses the collocated AP MLD 0 and the collocated AP MLD 1 at the same time.

When the non-AP MLD accesses the non-collocated AP MLD, a problem of managing the non-AP MLD, that is, how to identify the non-AP MLD, is involved.

In this embodiment of this application, an association identifier (association identifier, AID) is used to uniquely identify a non-AP MLD, and each collocated AP MLD in the non-collocated AP MLD independently manages its association identifier space. The association identifier space is, for example, [0, 2007], that is, an association identifier allocated by each collocated AP MLD to the non-AP MLD in the collocated AP MLD is any number from 0 to 2007.

FIG. 1 is used as an example. It is assumed that three non-AP MLDs are associated with the collocated AP MLD 0, and association identifiers allocated by the collocated AP MLD 0 to the three non-AP MLDs are 0, 1, and 2 respectively. Two non-AP MLDs and two single-link devices access the collocated AP MLD 1, and association identifiers allocated by the collocated AP MLD 1 to the two non-AP MLDs and the two single-link devices are 0, 1, 2, and 3 respectively. Two non-AP MLDs access a collocated AP MLD 2, and association identifiers allocated by the collocated AP MLD 2 to the two non-AP MLDs are 0 and 1 respectively. It can be learned that different collocated AP MLDs use independent association identifier spaces, and independently allocate association identifiers to accessed non-AP MLDs or single-link devices.

In the foregoing association identifier allocation solution, when one non-AP MLD accesses only one collocated AP MLD, no problem exists. However, when one non-AP MLD switches between collocated AP MLDs, or one non-AP MLD accesses two or more collocated AP MLDs at the same time, how to effectively manage allocation of association identifiers needs to be further studied.

With reference to the accompanying drawings, the following describes an association identifier allocation problem that may be encountered in a non-collocated AP MLD scenario.

Scenario 1: If a non-AP MLD has established a connection to at least one collocated AP MLD in a non-collocated AP MLD, the non-AP MLD needs to further establish a connection to one or more other collocated AP MLDs in the non-collocated AP MLD.

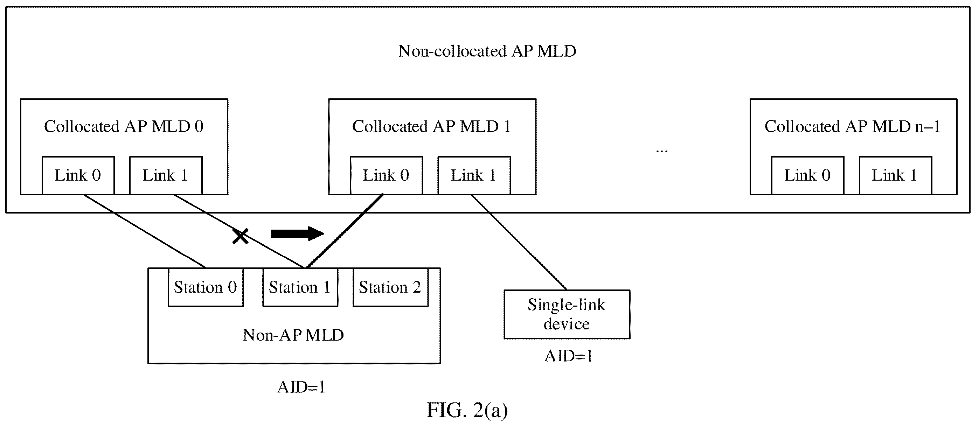

FIG. 2(a) is an example diagram of establishing a connection between a non-AP MLD and a collocated AP MLD according to an embodiment of this application. In this example, the non-AP MLD has established a connection to a collocated AP MLD 0, and has established two links, that is, a link or a connection between a station 0 and a link 0 of the collocated AP MLD 0, and a link or a connection between a station 1 and a link 1 of the collocated AP MLD 0. The non-AP MLD may periodically or aperiodically detect a surrounding collocated AP MLD. If a switching condition is met, the non-AP MLD may perform link switching. For example, the non-AP MLD disconnects the connection between the station 1 and the link 1 of the collocated AP MLD 0, and then establishes a connection between the station 1 and a link 0 of a collocated AP MLD 1. After the foregoing switching process is completed, the non-AP MLD establishes connections to the collocated AP MLD 0 and the collocated AP MLD 1 at the same time.

A specific implementation method of the switching condition is not limited in this embodiment of this application. For example, the switching condition includes but is not limited to one or more of the following conditions:
Condition 1: Quality of a link between the non-AP MLD and the collocated AP MLD 0 to which the connection has been established is lower than a preset threshold.
Condition 2: Link quality of another collocated AP MLD (for example, the collocated AP MLD 1) detected by the non-AP MLD is higher than a preset threshold.
Condition 3: Link quality of another collocated AP MLD (for example, the collocated AP MLD 1) detected by the non-AP MLD is higher than quality of a link between the non-AP MLD and the collocated AP MLD 0 to which the connection has been established.

In the example in FIG. 2(a), it is assumed that when the connection is established between the non-AP MLD and the collocated AP MLD 0, an association identifier allocated by the collocated AP MLD 0 to the non-AP MLD is 1; and one single-link device has accessed the collocated AP MLD 1 and an association identifier allocated by the collocated AP MLD 1 to the single-link device is 1. In this case, after the non-AP MLD establishes the connection to the collocated AP MLD 1, if the non-AP MLD still uses the association identifier previously allocated by the collocated AP MLD 0 in the collocated AP MLD 1, that is, the association identifier is 1, two devices in the collocated AP MLD 1 use a same association identifier, that is, the association identifier of the non-AP MLD and the association identifier of the single-link device are both 1. As a result, a problem of repeated allocation of association identifiers occurs.

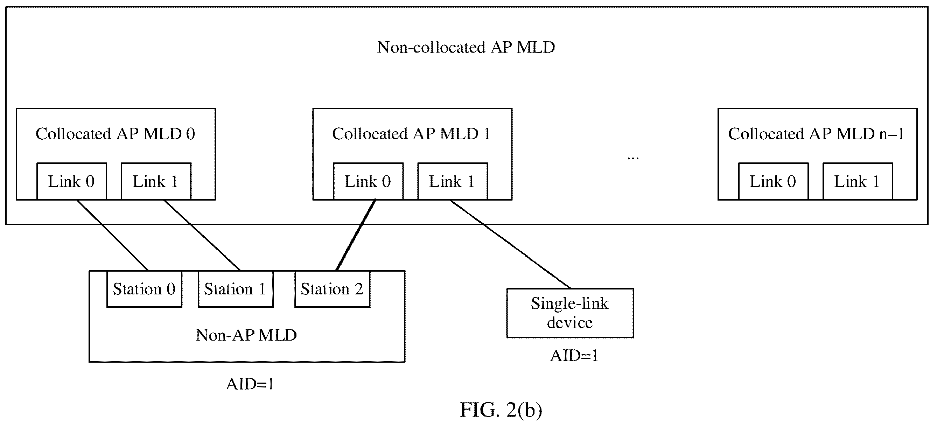

FIG. 2(b) is another example diagram of establishing a connection between a non-AP MLD and a collocated AP MLD according to an embodiment of this application. In this example, the non-AP MLD has established a connection to a collocated AP MLD 0, and has established two links: a link or a connection between a station 0 and a link 0 of the collocated AP MLD 0, and a link or a connection between a station 1 and a link 1 of the collocated AP MLD 0. The non-AP MLD may periodically or aperiodically detect a surrounding collocated AP MLD. If a connection establishment condition is met, the non-AP MLD may add a link. For example, the non-AP MLD newly establishes a connection between a station 2 in the non-AP MLD and a link 0 of a collocated AP MLD 1. After the foregoing connection addition is completed, the non-AP MLD establishes connections to the collocated AP MLD 0 and the collocated AP MLD 1 at the same time.

In the example in FIG. 2(b), a problem of repeated allocation of association identifiers, similar to that in FIG. 2(a), also exists, and details are not described herein.

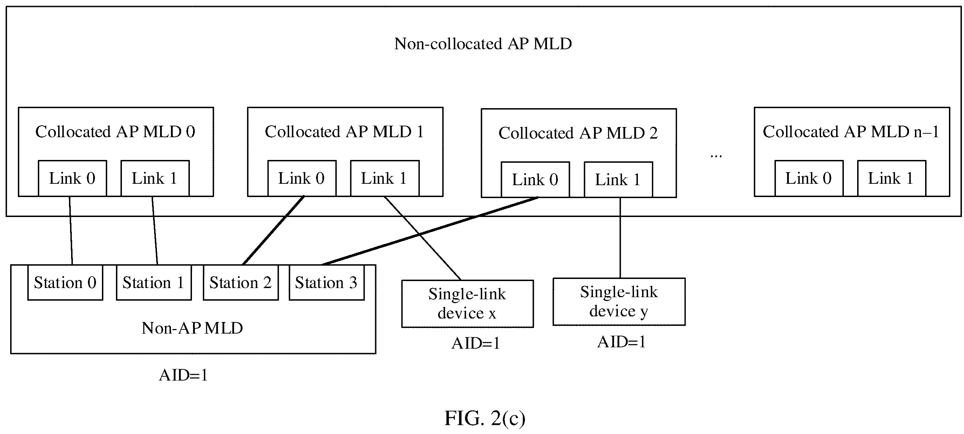

FIG. 2(c) is another example diagram of establishing a connection between a non-AP MLD and a collocated AP MLD according to an embodiment of this application. In this example, the non-AP MLD has established a connection to a collocated AP MLD 0, and has established two links, that is, a link or a connection between a station 0 and a link 0 of the collocated AP MLD 0, and a link or a connection between a station 1 and a link 1 of the collocated AP MLD 0. The non-AP MLD may periodically or aperiodically detect a surrounding collocated AP MLD. If a connection establishment condition is met, the non-AP MLD may add a link. For example, the non-AP MLD newly establishes a connection between a station 2 in the non-AP MLD and a link 0 of a collocated AP MLD 1, and newly establishes a connection between a station 3 in the non-AP MLD and a link 0 of a collocated AP MLD 2. After the foregoing connection addition is completed, the non-AP MLD establishes connections to the collocated AP MLD 0, the collocated AP MLD 1, and the collocated AP MLD 2 at the same time.

In the example in FIG. 2(c), a problem of repeated allocation of association identifiers, similar to that in FIG. 2(a) and FIG. 2(b), also exists. It is assumed that when the connection is established between the non-AP MLD and the collocated AP MLD 0, an association identifier allocated by the collocated AP MLD 0 to the non-AP MLD is 1; one single-link device x has accessed the collocated AP MLD 1 and an association identifier allocated by the collocated AP MLD 1 to the single-link device x is 1; and one single-link device y has accessed the collocated AP MLD 2 and an association identifier allocated by the collocated AP MLD 2 to the single-link device y is 1. In this case, after the non-AP MLD subsequently establishes the connections to the collocated AP MLD 1 and the collocated AP MLD 2, if the non-AP MLD still uses the association identifier previously allocated by the collocated AP MLD 0 in the collocated AP MLD 1, that is, the association identifier is 1, two devices in the collocated AP MLD 1 use a same association identifier, that is, the association identifier of the non-AP MLD and the association identifier of the single-link device x are both 1; and if the non-AP MLD still uses the association identifier previously allocated by the collocated AP MLD 0 in the collocated AP MLD 2, two devices in the collocated AP MLD 2 also use a same association identifier, that is, the association identifier of the non-AP MLD and the association identifier of the single-link device y are both 1. As a result, a problem of repeated allocation of association identifiers occurs.

Similarly, when the non-AP MLD has established a connection to at least one collocated AP MLD, if the non-AP MLD requests to newly establish connections to three or more collocated AP MLDs at the same time in one request, the foregoing association identifier allocation problem is also faced.

Scenario 2: If a non-AP MLD does not establish a connection to any collocated AP MLD in a non-collocated AP MLD, the non-AP MLD needs to establish connections to a plurality of collocated AP MLDs in the non-collocated AP MLD at the same time.

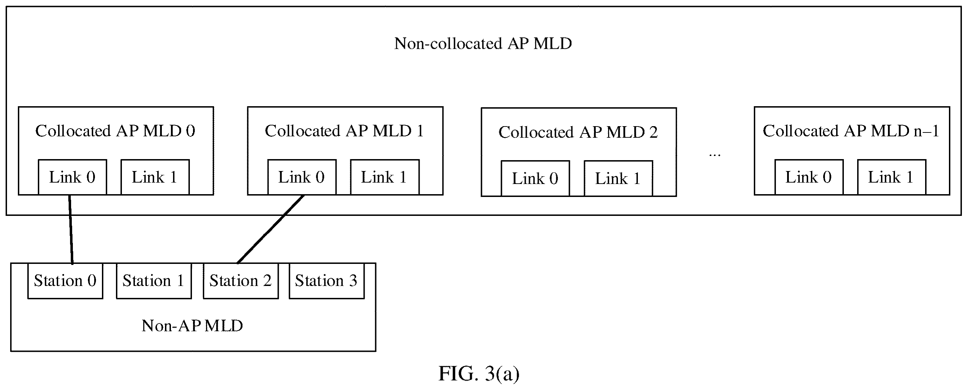

FIG. 3(a) is another example diagram of establishing a connection between a non-AP MLD and a collocated AP MLD according to an embodiment of this application. In this example, when the non-AP MLD does not establish a connection to any collocated AP MLD in the non-collocated AP MLD, the non-AP MLD needs to request to establish connections to a collocated AP MLD 0 and a collocated AP MLD 1 at the same time in one request. For example, the non-AP MLD establishes a connection between a station 0 and a link 0 of the collocated AP MLD 0, and establishes a connection between a station 2 and a link 0 of the collocated AP MLD 1.

In the example in FIG. 3(a), because the non-AP MLD establishes the connections to the two collocated AP MLDs at the same time, how the two collocated AP MLDs allocate association identifiers to the non-AP MLDs needs to be resolved.

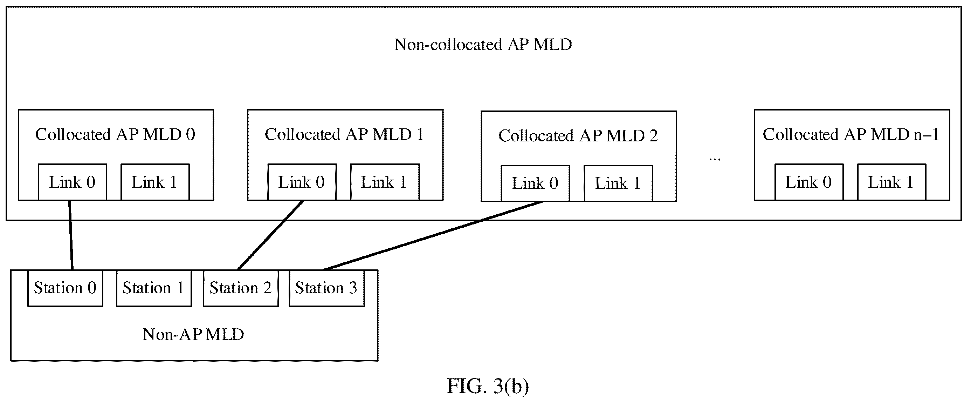

FIG. 3(b) is another example diagram of establishing a connection between a non-AP MLD and a collocated AP MLD according to an embodiment of this application. In this example, when the non-AP MLD does not establish a connection to any collocated AP MLD in the non-collocated AP MLD, the non-AP MLD needs to request to establish connections to a collocated AP MLD 0, a collocated AP MLD 1, and a collocated AP MLD 2 at the same time in one request. For example, the non-AP MLD establishes a connection between a station 0 and a link 0 of the collocated AP MLD 0, establishes a connection between a station 2 and a link 0 of the collocated AP MLD 1, and establishes a connection between a station 3 and a link 0 of the collocated AP MLD 2.

In the example in FIG. 3(b), because the non-AP MLD establishes the connections to the three collocated AP MLDs at the same time, how the three collocated AP MLDs allocate association identifiers to the non-AP MLDs needs to be resolved.

Similarly, when the non-AP MLD does not establish a connection to any collocated AP MLD in the non-collocated AP MLD, if the non-AP MLD requests to establish connections to four or more collocated AP MLDs at the same time in one request, the foregoing association identifier allocation problem is also faced.

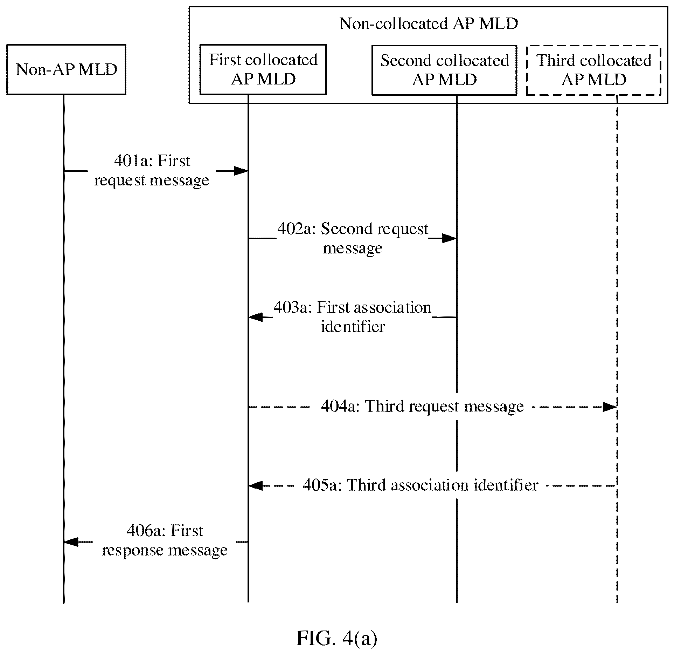

FIG. 4(a) is a schematic flowchart of a communication method according to an embodiment of this application. The method can resolve a problem of allocation of an association identifier in a non-collocated AP MLD. The non-collocated AP MLD includes at least a first collocated AP MLD and a second collocated AP MLD, and optionally further includes a third collocated AP MLD, a fourth collocated AP MLD, and the like.

The method includes the following steps.

Step 401a: A non-AP MLD sends a first request message to the first collocated AP MLD. Correspondingly, the first collocated AP MLD receives the first request message.

The first request message includes identification information of the second collocated AP MLD and identification information of a first link (LINK ID) in the second collocated AP MLD. The first request message is used to request to establish the first link, and the first link is a link between the non-AP MLD and the second collocated AP MLD. There may be one or more first links herein.

In an implementation method, the first request message further includes identification information of the first collocated AP MLD and identification information of a second link in the first collocated AP MLD, the first request message is further used to request to establish the second link, and the second link is a link between the non-AP MLD and the first collocated AP MLD. There may be one or more second links herein.

In an implementation method, the first request message further includes identification information of the third collocated AP MLD and identification information of a third link in the third collocated AP MLD, the first request message is further used to request to establish the third link, and the third link is a link between the non-AP MLD and the third collocated AP MLD. There may be one or more third links herein.

Step 402a: The first collocated AP MLD sends a second request message to the second collocated AP MLD. Correspondingly, the second collocated AP MLD receives the second request message.

The second request message includes identification information of the non-AP MLD, the identification information of the second collocated AP MLD, and the identification information of the first link, and the second request message is used to request to allocate an association identifier to the non-AP MLD.

In an implementation method, the first collocated AP MLD sends the second request message to the second collocated AP MLD by using a wired connection or a wireless connection between the first collocated AP MLD and the second collocated AP MLD.

In another implementation method, the first collocated AP MLD sends the second request message to the second collocated AP MLD through an AP MLD MAC layer in the non-collocated AP MLD. That is, the first collocated AP MLD sends the second request message to the AP MLD MAC layer, and the AP MLD MAC layer forwards the second request message to the second collocated AP MLD.

Step 403a: The second collocated AP MLD sends, to the first collocated AP MLD, a first association identifier allocated by the second collocated AP MLD to the non-AP MLD. Correspondingly, the first collocated AP MLD receives the first association identifier.

After receiving the second request message, the second collocated AP MLD allocates the first association identifier to the non-AP MLD, where the first association identifier has not been allocated by the second collocated AP MLD before, that is, the second collocated AP MLD selects an association identifier from association identifiers that have not been allocated by the second collocated AP MLD before as the first association identifier allocated to the non-AP MLD.

For example, the second collocated AP MLD allocates the first association identifier to the non-AP MLD according to either of the following methods:
Method 1: The second collocated AP MLD first determines whether an association identifier allocated by the first collocated AP MLD to the non-AP MLD is the same as association identifiers that have been allocated by the second collocated AP MLD; and if the association identifier allocated by the first collocated AP MLD to the non-AP MLD is different from all of the association identifiers that have been allocated by the second collocated AP MLD, the second collocated AP MLD does not need to reallocate an association identifier, but directly uses the association identifier allocated by the first collocated AP MLD to the non-AP MLD as the first association identifier allocated by the second collocated AP MLD to the non-AP MLD; or if the association identifier allocated by the first collocated AP MLD to the non-AP MLD is the same as an association identifier in the association identifiers that have been allocated by the second collocated AP MLD, the second collocated AP MLD selects an association identifier from association identifiers that have not been allocated by the second collocated AP MLD before as the first association identifier reallocated to the non-AP MLD.
Method 2: The second collocated AP MLD does not need to determine whether an association identifier allocated by the first collocated AP MLD to the non-AP MLD is the same as an association identifier that has been allocated by the second collocated AP MLD, but directly selects an association identifier from association identifiers that have not been allocated by the second collocated AP MLD before as the first association identifier reallocated to the non-AP MLD. Based on the method, the first association identifier selected by the second collocated AP MLD may be the same as or different from the association identifier allocated by the first collocated AP MLD to the non-AP MLD.

A method for allocating the first association identifier to the non-AP MLD by the second collocated AP MLD is described herein in a unified manner, and details are not described in other parts.

It should be noted that a method for allocating an association identifier to the non-AP MLD by another collocated AP MLD is similar to a method for allocating the first association identifier to the non-AP MLD by the second collocated AP MLD, and details are not described subsequently. For example, when the third collocated AP MLD subsequently allocates a third association identifier to the non-AP MLD, refer to the foregoing method 1 or method 2.

In an implementation method, in step 403a, the second collocated AP MLD further sends information about the second link to be established to the first collocated AP MLD, such as a basic multi-link element and an operation channel information element.

Step 404a: The first collocated AP MLD sends a third request message to the third collocated AP MLD. Correspondingly, the third collocated AP MLD receives the third request message.

The third request message includes the identification information of the non-AP MLD, the identification information of the third collocated AP MLD, and the identification information of the third link, and the third request message is used to request to allocate an association identifier to the non-AP MLD.

In an implementation method, the first collocated AP MLD sends the third request message to the third collocated AP MLD by using a wired connection or a wireless connection between the first collocated AP MLD and the third collocated AP MLD.

In another implementation method, the first collocated AP MLD sends the third request message to the third collocated AP MLD through the AP MLD MAC layer in the non-collocated AP MLD. That is, the first collocated AP MLD sends the third request message to the AP MLD MAC layer, and the AP MLD MAC layer forwards the third request message to the third collocated AP MLD.

Step 405a: The third collocated AP MLD sends, to the first collocated AP MLD, the third association identifier allocated by the third collocated AP MLD to the non-AP MLD. Correspondingly, the first collocated AP MLD receives the third association identifier.

After receiving the third request message, the third collocated AP MLD allocates the third association identifier to the non-AP MLD, where the third association identifier has not been allocated by the third collocated AP MLD before, that is, the third collocated AP MLD selects an association identifier from association identifiers that have not been allocated by the third collocated AP MLD before as the third association identifier allocated to the non-AP MLD.

In an implementation method, in step 405a, the third collocated AP MLD further sends information about the third link to be established to the first collocated AP MLD, such as a basic multi-link element and an operation channel information element.

Step 404a and step 405a are optional steps. When the first request message in step 401a includes the identification information of the third collocated AP MLD and the identification information of the third link in the third collocated AP MLD, step 404a and step 405a are performed; or otherwise, step 404a and step 405a do not need to be performed.

Step 406a: The first collocated AP MLD sends a first response message to the non-AP MLD. Correspondingly, the non-AP MLD receives the first response message.

The first response message includes the first association identifier.

In an implementation method, if step 404a and step 405a are performed, the first response message further includes the third association identifier.

In an implementation method, if the first request message in step 401a further includes the identification information of the first collocated AP MLD and the identification information of the third link in the first collocated AP MLD, the first collocated AP MLD further needs to allocate an association identifier, referred to as a second association identifier, to the non-AP MLD, where the second association identifier is an association identifier that has not been allocated by the first collocated AP MLD before. Correspondingly, the first response message in step 406a further includes the second association identifier.

In an implementation method, the first response message further includes one or more of information about the first link, the information about the second link, or the information about the third link.

The first association identifier, the second association identifier, and the third association identifier may be the same or different. This is not limited in this application.

It should be noted that an execution sequence between step 402a and step 404a is not limited, and an execution sequence between step 403a and step 405a is not limited.

It should be noted that the embodiment in FIG. 4(a) is described by using an example in which the non-AP MLD requests to establish connections to two or three collocated AP MLDs. In actual application, the embodiment in FIG. 4(a) is also applicable to a case in which the non-AP MLD requests to establish connections to more than three collocated AP MLDs. Details are not described herein.

The embodiment in FIG. 4(a) is applicable to the foregoing scenario 1 or scenario 2.

In an implementation method, when the embodiment in FIG. 4(a) is applied to the foregoing scenario 1, the first request message may be a multi-link reconfiguration request (multi-link reconfiguration request) message, and the first response message may be a multi-link reconfiguration response (multi-link reconfiguration response) message. The multi-link reconfiguration request message is also referred to as a multi-link reconfiguration request frame, and the multi-link reconfiguration response message is also referred to as a multi-link reconfiguration response frame.

When the multi-link reconfiguration response message includes the first association identifier, specific implementation of the multi-link reconfiguration response message may be any one of the following:
(1) The multi-link reconfiguration response message includes a frame body of an association response message, and an association identifier field (AID field) in the frame body includes the first association identifier.
(2) The multi-link reconfiguration response message includes an association identifier element (AID element), and the association identifier element includes the first association identifier.

When the multi-link reconfiguration response message includes the first association identifier and the third association identifier, specific implementation of the multi-link reconfiguration response message may be any one of the following:
(1) The multi-link reconfiguration response message includes a frame body of an association response message and a multi-link element (multi-link element), an association identifier field in the frame body includes the first association identifier, and the multi-link element includes the third association identifier.
(2) The multi-link reconfiguration response message includes two multi-link elements, and the two multi-link elements respectively include the first association identifier and the third association identifier.
(3) The multi-link reconfiguration response message includes two association identifier elements, and the two association identifier elements respectively include the first association identifier and the third association identifier.

In another implementation method, when the embodiment in FIG. 4(a) is applied to the foregoing scenario 2, the first request message may be an association request (association request) message, and the first response message may be an association response (association response) message. The association request message is also referred to as an association request frame, and the association response message is also referred to as an association response frame.

When the association response message includes the first association identifier and the second association identifier, specific implementation of the association response message may be any one of the following:
(1) An association identifier field in the association response message includes the first association identifier, and a multi-link element in the association response message includes the second association identifier.
(2) The association response message includes two multi-link elements, and the two multi-link elements respectively include the first association identifier and the second association identifier.
(3) The association response message includes two association identifier elements, and the two association identifier elements respectively include the first association identifier and the second association identifier.

When the association response message includes the first association identifier, the second association identifier, and the third association identifier, specific implementation of the association response message may be any one of the following:
(1) An association identifier field in the association response message includes the first association identifier, and two multi-link elements in the association response message respectively include the second association identifier and the third association identifier.
(2) The association response message includes three multi-link elements, and the three multi-link elements respectively include the first association identifier, the second association identifier, and the third association identifier.
(3) The association response message includes three association identifier elements, and the three association identifier elements respectively include the first association identifier, the second association identifier, and the third association identifier.

In an implementation method, if the non-AP MLD may operate on a plurality of links of a plurality of collocated AP MLDs at the same time for a long time and perform data communication on the plurality of links at the same time, the non-AP MLD needs to manage association identifiers respectively allocated by the plurality of collocated AP MLDs, and the non-AP MLD may receive a beacon (beacon) frame sent by each of the plurality of collocated AP MLDs, to obtain complete service information.

The following describes a specific implementation process of the embodiment in FIG. 4(a) with reference to the foregoing examples in FIG. 2(a) to FIG. 2(c) and FIG. 3(a) and FIG. 3(b). In addition, it is assumed that the first collocated AP MLD, the second collocated AP MLD, and the third collocated AP MLD are respectively a collocated AP MLD 0, a collocated AP MLD 1, and a collocated AP MLD 2.

Example 1: The embodiment in FIG. 4(a) is applied to the example in FIG. 2(a).

The non-AP MLD sends a first request message to the collocated AP MLD 0, where the first request message includes identification information of the collocated AP MLD 1 and identification information of a link 0 of the collocated AP MLD 1, and the first request message is used to request to establish a link or a connection between a station 1 and the link 0.

The collocated AP MLD 0 sends a second request message to the collocated AP MLD 1, where the second request message includes identification information of the non-AP MLD, the identification information of the collocated AP MLD 1, and the identification information of the link 0 of the collocated AP MLD 1.

The collocated AP MLD 1 allocates a first association identifier to the non-AP MLD based on the second request message, for example, the allocated first association identifier is 2.

The collocated AP MLD 1 sends the first association identifier to the collocated AP MLD 0.

The collocated AP MLD 0 sends a first response message to the non-AP MLD, where the first response message includes the first association identifier.

Example 2: The embodiment in FIG. 4(a) is applied to the example in FIG. 2(b).

A specific implementation process is similar to that in Example 1, and details are not described herein.

Example 3: The embodiment in FIG. 4(a) is applied to the example in FIG. 2(c).

The non-AP MLD sends a first request message to the collocated AP MLD 0, where the first request message includes identification information of the collocated AP MLD 1, identification information of a link 0 of the collocated AP MLD 1, identification information of the collocated AP MLD 2, and identification information of a link 0 of the collocated AP MLD 2, and the first request message is used to request to establish a link or a connection between a station 2 and the link 0 of the collocated AP MLD 1, and establish a link or a connection between a station 3 and the link 0 of the collocated AP MLD 2.

The collocated AP MLD 0 sends a second request message to the collocated AP MLD 1, where the second request message includes identification information of the non-AP MLD, the identification information of the collocated AP MLD 1, and the identification information of the link 0 of the collocated AP MLD 1. The collocated AP MLD 1 allocates a first association identifier to the non-AP MLD based on the second request message, for example, the allocated first association identifier is 2. The collocated AP MLD 1 sends the first association identifier to the collocated AP MLD 0.

In addition, the collocated AP MLD 0 sends a third request message to the collocated AP MLD 2, where the third request message includes the identification information of the non-AP MLD, the identification information of the collocated AP MLD 2, and the identification information of the link 0 of the collocated AP MLD 2. The collocated AP MLD 2 allocates a third association identifier to the non-AP MLD based on the third request message, for example, the allocated third association identifier is 2. The collocated AP MLD 2 sends the third association identifier to the collocated AP MLD 0.

The collocated AP MLD 0 sends a first response message to the non-AP MLD, where the first response message includes the first association identifier and the third association identifier.

Example 4: The embodiment in FIG. 4(a) is applied to the example in FIG. 3(a).

The non-AP MLD sends a first request message to the collocated AP MLD 0, where the first request message includes identification information of the collocated AP MLD 0, identification information of a link 0 of the collocated AP MLD 0, identification information of the collocated AP MLD 1, and identification information of a link 0 of the collocated AP MLD 1, and the first request message is used to request to establish a link or a connection between a station 0 and the link 0 of the collocated AP MLD 0, and establish a link or a connection between a station 2 and the link 0 of the collocated AP MLD 1.

The collocated AP MLD 0 sends a second request message to the collocated AP MLD 1, where the second request message includes identification information of the non-AP MLD, the identification information of the collocated AP MLD 1, and the identification information of the link 0 of the collocated AP MLD 1. The collocated AP MLD 1 allocates a first association identifier to the non-AP MLD based on the second request message, for example, the allocated first association identifier is 1. The collocated AP MLD 1 sends the first association identifier to the collocated AP MLD 0.

In addition, the collocated AP MLD 0 allocates a second association identifier to the non-AP MLD, for example, the allocated second association identifier is 1.

The collocated AP MLD 0 sends a first response message to the non-AP MLD, where the first response message includes the first association identifier and the second association identifier.

Example 5: The embodiment in FIG. 4(a) is applied to the example in FIG. 3(b).

The non-AP MLD sends a first request message to the collocated AP MLD 0, where the first request message includes identification information of the collocated AP MLD 0, identification information of a link 0 of the collocated AP MLD 0, identification information of the collocated AP MLD 1, identification information of a link 0 of the collocated AP MLD 1, identification information of the collocated AP MLD 2, and identification information of a link 0 of the collocated AP MLD 2, and the first request message is used to request to establish a link or a connection between a station 0 and the link 0 of the collocated AP MLD 0, establish a link or a connection between a station 2 and the link 0 of the collocated AP MLD 1, and establish a link or a connection between a station 3 and the link 0 of the collocated AP MLD 2.

The collocated AP MLD 0 sends a second request message to the collocated AP MLD 1, where the second request message includes identification information of the non-AP MLD, the identification information of the collocated AP MLD 1, and the identification information of the link 0 of the collocated AP MLD 1. The collocated AP MLD 1 allocates a first association identifier to the non-AP MLD based on the second request message, for example, the allocated first association identifier is 1. The collocated AP MLD 1 sends the first association identifier to the collocated AP MLD 0.

In addition, the collocated AP MLD 0 sends a third request message to the collocated AP MLD 2, where the third request message includes the identification information of the non-AP MLD, the identification information of the collocated AP MLD 2, and the identification information of the link 0 of the collocated AP MLD 2. The collocated AP MLD 2 allocates a third association identifier to the non-AP MLD based on the third request message, for example, the allocated third association identifier is 1. The collocated AP MLD 2 sends the third association identifier to the collocated AP MLD 0.

In addition, the collocated AP MLD 0 allocates a second association identifier to the non-AP MLD, for example, the allocated second association identifier is 1.

The collocated AP MLD 0 sends a first response message to the non-AP MLD, where the first response message includes the first association identifier, the second association identifier, and the third association identifier.

In the foregoing solution, when the non-AP MLD establishes a connection to one or more collocated AP MLDs in the non-collocated AP MLD, each collocated AP MLD allocates an association identifier to the non-AP MLD, and the allocated association identifier has not been allocated by the collocated AP MLD before. This can avoid repetition of association identifiers of different non-AP MLDs accessed by a same collocated AP MLD, thereby implementing proper management of the non-AP MLDs.

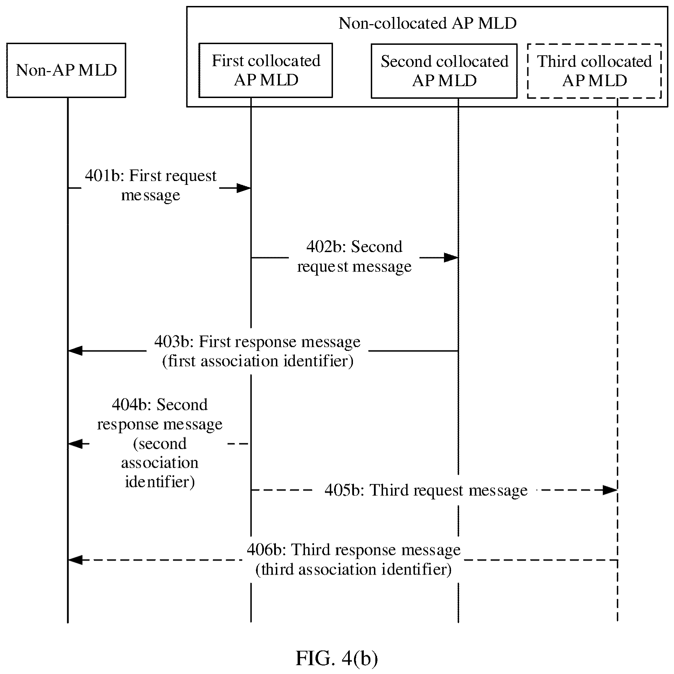

FIG. 4(b) is a schematic flowchart of another communication method according to an embodiment of this application. The method includes the following steps.

Step 401b: A non-AP MLD sends a first request message to a first collocated AP MLD. Correspondingly, the first collocated AP MLD receives the first request message.

The first request message includes identification information of a second collocated AP MLD and identification information of a first link (LINK ID) in the second collocated AP MLD. The first request message is used to request to establish the first link, and the first link is a link between the non-AP MLD and the second collocated AP MLD. There may be one or more first links herein.

In an implementation method, the first request message further includes identification information of the first collocated AP MLD and identification information of a second link in the first collocated AP MLD, the first request message is further used to request to establish the second link, and the second link is a link between the non-AP MLD and the first collocated AP MLD. There may be one or more second links herein.

In an implementation method, the first request message further includes identification information of a third collocated AP MLD and identification information of a third link in the third collocated AP MLD, the first request message is further used to request to establish the third link, and the third link is a link between the non-AP MLD and the third collocated AP MLD. There may be one or more third links herein.

Step 402b: The first collocated AP MLD sends a second request message to the second collocated AP MLD. Correspondingly, the second collocated AP MLD receives the second request message.

The second request message includes identification information of the non-AP MLD, the identification information of the second collocated AP MLD, and the identification information of the first link, and the second request message is used to request to allocate an association identifier to the non-AP MLD.

In an implementation method, the first collocated AP MLD sends the second request message to the second collocated AP MLD by using a wired connection or a wireless connection between the first collocated AP MLD and the second collocated AP MLD.

In another implementation method, the first collocated AP MLD sends the second request message to the second collocated AP MLD through an AP MLD MAC layer in a non-collocated AP MLD. That is, the first collocated AP MLD sends the second request message to the AP MLD MAC layer, and the AP MLD MAC layer forwards the second request message to the second collocated AP MLD.

Step 403b: The second collocated AP MLD sends a first response message to the non-AP MLD. Correspondingly, the non-AP MLD receives the first response message.

The first response message includes a first association identifier.

After receiving the second request message, the second collocated AP MLD allocates the first association identifier to the non-AP MLD, where the first association identifier has not been allocated by the second collocated AP MLD before, that is, the second collocated AP MLD selects an association identifier from association identifiers that have not been allocated by the second collocated AP MLD before as the first association identifier allocated to the non-AP MLD.

In an implementation method, the first response message further includes information about the first link to be established, such as a basic multi-link element and an operation channel information element.

Step 404b: The first collocated AP MLD sends a second response message to the non-AP MLD. Correspondingly, the non-AP MLD receives the second response message.

The second response message includes a second association identifier.

Step 404b is an optional step. If the first request message in step 401b further includes the identification information of the first collocated AP MLD and the identification information of the third link in the first collocated AP MLD, the first collocated AP MLD further needs to allocate an association identifier, referred to as a second association identifier, to the non-AP MLD, where the second association identifier is an association identifier that has not been allocated by the first collocated AP MLD before. Correspondingly, step 404b needs to be performed, that is, the first collocated AP MLD sends the second association identifier to the non-AP MLD by using the second response message.

In an implementation method, the second response message further includes information about the second link to be established, such as a basic multi-link element and an operation channel information element.

Step 405b: The first collocated AP MLD sends a third request message to the third collocated AP MLD. Correspondingly, the third collocated AP MLD receives the third request message.

The third request message includes the identification information of the non-AP MLD, the identification information of the third collocated AP MLD, and the identification information of the third link, and the third request message is used to request to allocate an association identifier to the non-AP MLD.

In an implementation method, the first collocated AP MLD sends the third request message to the third collocated AP MLD by using a wired connection or a wireless connection between the first collocated AP MLD and the third collocated AP MLD.

In another implementation method, the first collocated AP MLD sends the third request message to the third collocated AP MLD through the AP MLD MAC layer in the non-collocated AP MLD. That is, the first collocated AP MLD sends the third request message to the AP MLD MAC layer, and the AP MLD MAC layer forwards the third request message to the third collocated AP MLD.

Step 406b: The third collocated AP MLD sends a third response message to the non-AP MLD. Correspondingly, the non-AP MLD receives the third response message.

The third response message includes a third association identifier.

After receiving the third request message, the third collocated AP MLD allocates the third association identifier to the non-AP MLD, where the third association identifier has not been allocated by the third collocated AP MLD before, that is, the third collocated AP MLD selects an association identifier from association identifiers that have not been allocated by the third collocated AP MLD before as the third association identifier allocated to the non-AP MLD.

In an implementation method, the third response message further includes information about the third link to be established, such as a basic multi-link element and an operation channel information element.

Step 405b and step 406b are optional steps. When the first request message in step 401b includes the identification information of the third collocated AP MLD and the identification information of the third link in the third collocated AP MLD, step 405b and step 406b are performed; or otherwise, step 405b and step 406b do not need to be performed.

The first association identifier, the second association identifier, and the third association identifier may be the same or different. This is not limited in this application.

It should be noted that an execution sequence between step 402b and step 405b is not limited, and an execution sequence between step 403b and step 404b and step 406b is not limited.

It should be noted that the embodiment in FIG. 4(b) is described by using an example in which the non-AP MLD requests to establish connections to two or three collocated AP MLDs. In actual application, the embodiment in FIG. 4(b) is also applicable to a case in which the non-AP MLD requests to establish connections to more than three collocated AP MLDs. Details are not described herein.

The embodiment in FIG. 4(b) is also applicable to the foregoing scenario 1 or scenario 2. When the embodiments in FIG. 4(b) is applicable to the foregoing examples in FIG. 2(a) to FIG. 2(c) and FIG. 3(a) and FIG. 3(b), a specific implementation process of the implementation in FIG. 4(b) is similar to that in Example 1 to Example 5, and details are not described herein. A difference lies in that, in the embodiment in FIG. 4(b), each collocated AP MLD that is requested to establish a connection directly sends, to the non-AP MLD, a response message carrying an association identifier, while in the embodiment in FIG. 4(a), a fixed collocated AP MLD (that is, the first collocated AP MLD) sends, to the non-AP MLD, an association identifier allocated by each collocated AP MLD to the non-AP MLD.

The embodiment in FIG. 4(b) is applicable to the foregoing scenario 1 or scenario 2.

In an implementation method, when the embodiment in FIG. 4(b) is applied to the foregoing scenario 1, the first request message may be a multi-link reconfiguration request message, and the first response message may be a multi-link reconfiguration response message. The multi-link reconfiguration response message includes a frame body of an association response message, and an association identifier field in the frame body includes the first association identifier. Alternatively, the multi-link reconfiguration response message includes an association identifier element, and the association identifier element includes the first association identifier.

In another implementation method, when the embodiment in FIG. 4(b) is applied to the foregoing scenario 2, the first request message may be an association request message, and the first response message may be an association response message. An association identifier field in the association response message includes the first association identifier. Alternatively, the association response message includes an association identifier element, and the association identifier element includes the first association identifier.

In an implementation method, if the non-AP MLD may operate on a plurality of links of a plurality of collocated AP MLDs at the same time for a long time and perform data communication on the plurality of links at the same time, the non-AP MLD needs to manage association identifiers respectively allocated by the plurality of collocated AP MLDs, and the non-AP MLD may receive a beacon (beacon) frame sent by each of the plurality of collocated AP MLDs, to obtain complete service information.

In the foregoing solution, when the non-AP MLD establishes a connection to one or more collocated AP MLDs in the non-collocated AP MLD, each collocated AP MLD allocates an association identifier to the non-AP MLD, and the allocated association identifier has not been allocated by the collocated AP MLD before. This can avoid repetition of association identifiers of different non-AP MLDs accessed by a same collocated AP MLD, thereby implementing proper management of the non-AP MLDs.

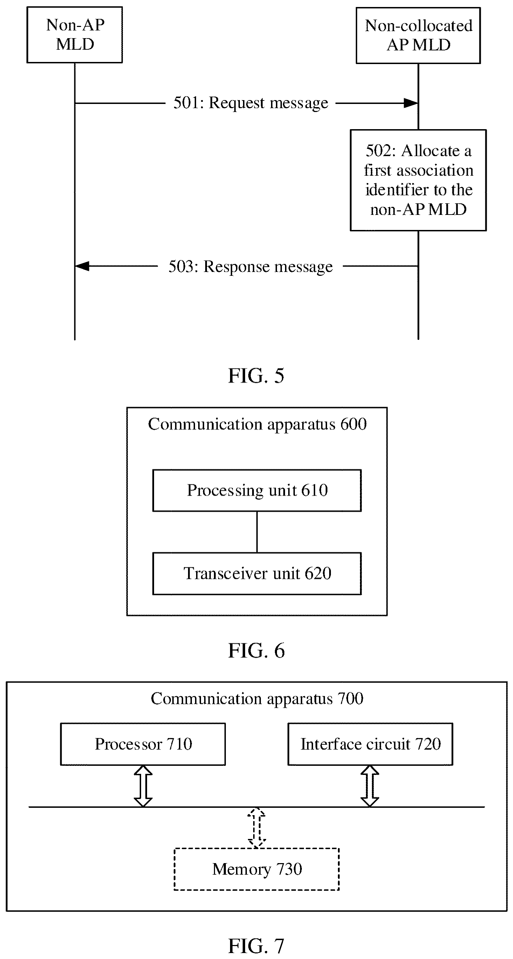

FIG. 5 is a schematic flowchart of another communication method according to an embodiment of this application. The method can resolve a problem of allocation of an association identifier in a non-collocated AP MLD. The non-collocated AP MLD includes at least a first collocated AP MLD and a second AP MLD, and optionally further includes a third collocated AP MLD, a fourth AP MLD, and the like.

The method includes the following steps.

Step 501: A non-AP MLD sends a request message to the non-collocated AP MLD. Correspondingly, the non-collocated AP MLD receives the request message.

For example, the non-AP MLD sends the request message to the first collocated AP MLD in the non-collocated AP MLD, so that the non-collocated AP MLD receives the request message.

The request message includes identification information of the second collocated AP MLD in the non-collocated AP MLD and identification information of a first link in the second collocated AP MLD, the request message is used to request to establish the first link, and the first link is a link between the non-AP MLD and the second collocated AP MLD. There may be one or more first links herein.

In an implementation method, the request message further includes identification information of the first collocated AP MLD and identification information of a second link in the first collocated AP MLD, the request message is further used to request to establish the second link, and the second link is a link between the non-AP MLD and the first collocated AP MLD. There may be one or more second links herein.

In an implementation method, the request message further includes identification information of a third collocated AP MLD and identification information of a third link in the third collocated AP MLD, the request message is further used to request to establish the third link, and the third link is a link between the non-AP MLD and the third collocated AP MLD. There may be one or more third links herein.

Step 502: The non-collocated AP MLD allocates a first association identifier to the non-AP MLD.

That the non-collocated AP MLD allocates the first association identifier to the non-AP MLD may be specifically: An AP MLD MAC layer in the non-collocated AP MLD allocates the first association identifier to the non-AP MLD.

The first association identifier is used by the second collocated AP MLD to uniquely identify the non-AP MLD, and the first association identifier has not been allocated by the second collocated AP MLD before. Optionally, the association identifier is not only not allocated by the second collocated AP MLD, but also not allocated by any other collocated AP MLD in the non-collocated AP MLD.

In an implementation method, if the request message further includes the identification information of the first collocated AP MLD and the identification information of the second link in the first collocated AP MLD, the first association identifier allocated by the collocated AP MLD to the non-AP MLD in step 502 is used not only by the second collocated AP MLD to uniquely identify the non-AP MLD, but also by the first collocated AP MLD to uniquely identify the non-AP MLD, where the first association identifier has not been allocated by the first collocated AP MLD before. Optionally, the association identifier is not only not allocated by the first collocated AP MLD or the second collocated AP MLD, but also not allocated by any other collocated AP MLD in the non-collocated AP MLD.

In an implementation method, if the request message further includes the identification information of the third collocated AP MLD and the identification information of the third link in the third collocated AP MLD, the first association identifier allocated by the collocated AP MLD to the non-AP MLD in step 502 is used not only by the second collocated AP MLD to uniquely identify the non-AP MLD, but also by the third collocated AP MLD to uniquely identify the non-AP MLD, where the first association identifier has not been allocated by the third collocated AP MLD before. Optionally, the association identifier is not only not allocated by the first collocated AP MLD or the third collocated AP MLD, but also not allocated by any other collocated AP MLD in the non-collocated AP MLD.

In an implementation method, if the request message further includes the identification information of the first collocated AP MLD and the identification information of the second link in the first collocated AP MLD, and further includes the identification information of the third collocated AP MLD and the identification information of the third link in the third collocated AP MLD, the first association identifier allocated by the collocated AP MLD to the non-AP MLD in step 502 is used not only by the second collocated AP MLD to uniquely identify the non-AP MLD, but also by the first collocated AP MLD to uniquely identify the non-AP MLD, and also by the third collocated AP MLD to uniquely identify the non-AP MLD, where the first association identifier has not been allocated by the first collocated AP MLD or the third collocated AP MLD before. Optionally, the association identifier is not only not allocated by the first collocated AP MLD, the second collocated AP MLD, or the third collocated AP MLD, but also not allocated by any other collocated AP MLD in the non-collocated AP MLD.

Step 503: The non-collocated AP MLD sends a response message to the non-AP MLD. Correspondingly, the non-AP MLD receives the response message.

In an implementation method, if the request message includes the identification information of the second collocated AP MLD and the identification information of the first link in the second collocated AP MLD, the first collocated AP MLD or the second collocated AP MLD sends the response message to the non-AP MLD, where the response message includes the first association identifier.

In another implementation method, if the request message includes the identification information of the second collocated AP MLD and the identification information of the first link in the second collocated AP MLD, and includes the identification information of the first collocated AP MLD and the identification information of the second link in the first collocated AP MLD, in step 503, at least one of the first collocated AP MLD or the second collocated AP MLD may send the response message to the non-AP MLD, where the response message includes the first association identifier.

In another implementation method, if the request message includes the identification information of the second collocated AP MLD and the identification information of the first link in the second collocated AP MLD, and includes the identification information of the third collocated AP MLD and the identification information of the third link in the third collocated AP MLD, in step 503, at least one of the first collocated AP MLD, the second collocated AP MLD, or the third collocated AP MLD may send the response message to the non-AP MLD, where the response message includes the first association identifier.

In another implementation method, if the request message includes the identification information of the second collocated AP MLD and the identification information of the first link in the second collocated AP MLD, includes the identification information of the first collocated AP MLD and the identification information of the second link in the first collocated AP MLD, and further includes the identification information of the third collocated AP MLD and the identification information of the third link in the third collocated AP MLD, in step 503, at least one of the first collocated AP MLD, the second collocated AP MLD, or the third collocated AP MLD may send the response message to the non-AP MLD, where the response message includes the first association identifier.

It should be noted that the embodiment in FIG. 5 is described by using an example in which the non-AP MLD requests to establish a connection to one, two, or three collocated AP MLDs. In actual application, the embodiment in FIG. 5 is also applicable to a case in which the non-AP MLD requests to establish connections to more than three collocated AP MLDs. Details are not described herein.

The embodiment in FIG. 5 is applicable to the foregoing scenario 1 or scenario 2.

In an implementation method, when the embodiment in FIG. 5 is applied to the foregoing scenario 1, the request message may be a multi-link reconfiguration request message, and the response message may be a multi-link reconfiguration response message. For example, the multi-link reconfiguration response message includes a frame body of an association response message, and an association identifier field in the frame body includes the first association identifier. For another example, the multi-link reconfiguration response message includes an association identifier element, and the association identifier element includes the first association identifier.

In another implementation method, when the embodiment in FIG. 5 is applied to the foregoing scenario 2, the request message may be an association request message, and the response message may be an association response message. For example, an association identifier field in the association response message includes the first association identifier. For another example, the association response message includes an association identifier element, and the association identifier element includes the first association identifier.

The following describes a specific implementation process of the embodiment in FIG. 5 with reference to the foregoing examples in FIG. 2(a) to FIG. 2(c) and FIG. 3(a) and

FIG. 3(b). In addition, it is assumed that the first collocated AP MLD, the second collocated AP MLD, and the third collocated AP MLD are respectively a collocated AP MLD 0, a collocated AP MLD 1, and a collocated AP MLD 2.

Example a: The embodiment in FIG. 5 is applied to the example in FIG. 2(a).

The non-AP MLD sends a request message to the collocated AP MLD 0, where the request message includes identification information of the collocated AP MLD 1 and identification information of a link 0 of the collocated AP MLD 1, and the request message is used to request to establish a link or a connection between a station 1 and the link 0.

The collocated AP MLD 0 sends the request message to the AP MLD MAC layer.

The AP MLD MAC layer obtains a bitmap 1 of the collocated AP MLD 1 from the collocated AP MLD 1 based on the request message, where the bitmap 1 indicates an association identifier that has been allocated by the collocated AP MLD 1.

The AP MLD MAC layer further obtains a bitmap 2 of the collocated AP MLD 0 that has been currently associated with the non-AP MLD, where the bitmap 2 indicates an association identifier that has been allocated by the collocated AP MLD 0.

The AP MLD MAC layer allocates a first association identifier to the non-AP MLD based on the bitmap 1 and the bitmap 2, where neither of the association identifiers indicated by the bitmap 1 and the bitmap 2 includes the first association identifier. Optionally, an association identifier that is indicated by a bitmap of an AP MLD i and that has been allocated by the collocated AP MLD i does not include the first association identifier, where i traverses 2 to n-1.

In an implementation method, if an association identifier x allocated by the collocated AP MLD 0 that has been currently associated with the non-AP MLD to the non-AP MLD has not been allocated by any other collocated AP MLD in the non-collocated AP MLD before, the AP MLD MAC layer may use the association identifier x as the newly allocated first association identifier, that is, the association identifier x is used not only by the collocated AP MLD 0 to identify the non-AP MLD, but also by the collocated AP MLD 1 to identify the non-AP MLD. Refer to FIG. 2(a). Before sending the request message, the non-AP MLD has established an association with the collocated AP MLD 0, and the allocated association identifier is 1. If the association identifier that has been allocated by the collocated AP MLD 1 does not include 1, the non-collocated AP MLD may continue to allocate an association identifier that is equal to 1 to the non-AP MLD, that is, the association identifier used by the collocated AP MLD 1 to identify the non-AP MLD is equal to 1. Alternatively, if none of the association identifiers that have been allocated by the collocated AP MLD 1 to the collocated AP MLD n-1 includes 1, the non-collocated AP MLD may continue to allocate an association identifier that is equal to 1 to the non-AP MLD, that is, the association identifier used by the collocated AP MLD 1 to identify the non-AP MLD is equal to 1.

After the non-collocated AP MLD allocates the first association identifier to the non-AP MLD, the collocated AP MLD 0 or the collocated AP MLD 1 sends a response message to the non-AP MLD, where the response message includes the first association identifier.

Example b: The embodiment in FIG. 5 is applied to the example in FIG. 2(b).

A specific implementation process is similar to that in Example a, and details are not described herein.

Example c: The embodiment in FIG. 5 is applied to the example in FIG. 2(c).

The non-AP MLD sends a request message to the collocated AP MLD 0, where the request message includes identification information of the collocated AP MLD 1 and identification information of a link 0 of the collocated AP MLD 1, and includes identification information of the collocated AP MLD 2 and identification information of a link 0 of the collocated AP MLD 2, and the request message is used to request to establish a link or a connection between a station 2 and the link 0, and establish a link or a connection between a station 3 and the link 0.

The collocated AP MLD 0 sends the request message to the AP MLD MAC layer.

The AP MLD MAC layer obtains a bitmap 1 of the collocated AP MLD 1 from the collocated AP MLD 1 based on the request message, where the bitmap 1 indicates an association identifier that has been allocated by the collocated AP MLD 1; and obtains a bitmap 2 of the collocated AP MLD 2 from the collocated AP MLD 2 based on the request message, where the bitmap 2 indicates an association identifier that has been allocated by the collocated AP MLD 2.

The AP MLD MAC layer further obtains a bitmap 3 of the collocated AP MLD 0 that has been currently associated with the non-AP MLD, where the bitmap 3 indicates an association identifier that has been allocated by the collocated AP MLD 0.

The AP MLD MAC layer allocates a first association identifier to the non-AP MLD based on the bitmap 1, the bitmap 2, and the bitmap 3, where none of the association identifiers indicated by the bitmap 1, the bitmap 2, and the bitmap 3 includes the first association identifier. Optionally, an association identifier that is indicated by a bitmap of a collocated AP MLD i and that has been allocated by the collocated AP MLD i does not include the first association identifier, where i traverses 3 to n-1.

In an implementation method, if an association identifier x allocated by the collocated AP MLD 0 that has been currently associated with the non-AP MLD to the non-AP MLD has not been allocated by any other collocated AP MLD in the non-collocated AP MLD before, the AP MLD MAC layer may use the association identifier x as the newly allocated first association identifier, that is, the association identifier x is used not only by the collocated AP MLD 0 to identify the non-AP MLD, but also by the collocated AP MLD 1 and the collocated AP MLD 2 to identify the non-AP MLD. Refer to FIG. 2(c). Before sending the request message, the non-AP MLD has established an association with the collocated AP MLD 0, and the allocated association identifier is 1. If neither of the association identifiers that have been allocated by the collocated AP MLD 1 and the collocated AP MLD 2 includes 1, the non-collocated AP MLD may continue to allocate an association identifier that is equal to 1 to the non-AP MLD, that is, the association identifier used by the collocated AP MLD 1 and the collocated AP MLD 2 to identify the non-AP MLD is equal to 1. Alternatively, if none of the association identifiers that have been allocated by the collocated AP MLD 1 to the collocated AP MLD n-1 includes 1, the non-collocated AP MLD may continue to allocate an association identifier that is equal to 1 to the non-AP MLD, that is, the association identifier used by the collocated AP MLD 1 and the collocated AP MLD 2 to identify the non-AP MLD is equal to 1.

After the non-collocated AP MLD allocates the first association identifier to the non-AP MLD, at least one of the collocated AP MLD 0, the collocated AP MLD 1, or the collocated AP MLD 2 sends a response message to the non-AP MLD, where the response message includes the first association identifier.

Example d: The embodiment in FIG. 5 is applied to the example in FIG. 3(a).

The non-AP MLD sends a request message to the collocated AP MLD 0, where the request message includes identification information of the collocated AP MLD 1 and identification information of a link 0 of the collocated AP MLD 1, and includes identification information of the collocated AP MLD 0 and identification information of a link 0 of the collocated AP MLD 0, and the request message is used to request to establish a link or a connection between a station 2 and the link 0, and establish a link or a connection between a station 0 and the link 0.

The collocated AP MLD 0 sends the request message to the AP MLD MAC layer.

The AP MLD MAC layer obtains a bitmap 1 of the collocated AP MLD 1 from the collocated AP MLD 1 based on the request message, where the bitmap 1 indicates an association identifier that has been allocated by the collocated AP MLD 1; and obtains a bitmap 2 of the collocated AP MLD 2 from the collocated AP MLD 0 based on the request message, where the bitmap 2 indicates an association identifier that has been allocated by the collocated AP MLD 0.

The AP MLD MAC layer allocates a first association identifier to the non-AP MLD based on the bitmap 1 and the bitmap 2, where neither of the association identifiers indicated by the bitmap 1 and the bitmap 2 includes the first association identifier. Optionally, an association identifier that is indicated by a bitmap of a collocated AP MLD i and that has been allocated by the collocated AP MLD i does not include the first association identifier, where i traverses 2 to n-1.

After the non-collocated AP MLD allocates the first association identifier to the non-AP MLD, at least one of the collocated AP MLD 0 or the collocated AP MLD 1 sends a response message to the non-AP MLD, where the response message includes the first association identifier.

Example e: The embodiment in FIG. 5 is applied to the example in FIG. 3(b).

The non-AP MLD sends a request message to the collocated AP MLD 0, where the request message includes identification information of the collocated AP MLD 1 and identification information of a link 0 of the collocated AP MLD 1, includes identification information of the collocated AP MLD 2 and identification information of a link 0 of the collocated AP MLD 2, and further includes identification information of the collocated AP MLD 0 and identification information of a link 0 of the collocated AP MLD 0, and the request message is used to request to establish a link or a connection between a station 2 and the link 0, establish a link or a connection between a station 3 and the link 0, and establish a link or a connection between a station 0 and the link 0.

The collocated AP MLD 0 sends the request message to the AP MLD MAC layer.

The AP MLD MAC layer obtains a bitmap 1 of the collocated AP MLD 1 from the collocated AP MLD 1 based on the request message, where the bitmap 1 indicates an association identifier that has been allocated by the collocated AP MLD 1; obtains a bitmap 2 of the collocated AP MLD 2 from the collocated AP MLD 2 based on the request message, where the bitmap 2 indicates an association identifier that has been allocated by the collocated AP MLD 2; and obtains a bitmap 3 of the collocated AP MLD 0 from the collocated AP MLD 0 based on the request message, where the bitmap 3 indicates an association identifier that has been allocated by the collocated AP MLD 0.

The AP MLD MAC layer allocates a first association identifier to the non-AP MLD based on the bitmap 1, the bitmap 2, and the bitmap 3, where none of the association identifiers indicated by the bitmap 1, the bitmap 2, and the bitmap 3 includes the first association identifier. Optionally, an association identifier that is indicated by a bitmap of a collocated AP MLD i and that has been allocated by the collocated AP MLD i does not include the first association identifier, where i traverses 3 to n-1.

After the non-collocated AP MLD allocates the first association identifier to the non-AP MLD, at least one of the collocated AP MLD 0, the collocated AP MLD 1, or the collocated AP MLD 2 sends a response message to the non-AP MLD, where the response message includes the first association identifier.

In the foregoing solution, when the non-AP MLD establishes a connection to one or more collocated AP MLDs in the non-collocated AP MLD, the non-collocated AP MLD allocates an association identifier to the non-AP MLD, and the allocated association identifier has not been allocated before by the collocated AP MLD to which the non-AP MLD requests to establish a connection. This can avoid repetition of association identifiers of different non-AP MLDs accessed by a same collocated AP MLD, thereby implementing proper management of the non-AP MLDs. In addition, if the non-AP MLD requests to establish connections to a plurality of collocated AP MLDs at a time, the non-collocated AP MLD only needs to allocate one association identifier to the non-AP MLD, where the association identifier is used by the plurality of collocated AP MLDs to uniquely identify the non-AP MLD, thereby reducing a quantity of association identifiers managed by the non-AP MLD, simplifying management of the non-AP MLD, and reducing overheads.

It may be understood that, to implement functions in the foregoing embodiments, the non-access point multi-link device, the first collocated access point multi-link device, the second collocated access point multi-link device, or the non-collocated access point multi-link device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 6 and FIG. 7 are diagrams of structures of possible communication apparatuses according to embodiments of this application. These communication apparatuses may be configured to implement functions of a non-access point multi-link device, a first collocated access point multi-link device, a second collocated access point multi-link device, or a non-collocated access point multi-link device in the foregoing method embodiments, and therefore can also implement beneficial effects of the foregoing method embodiments. In embodiments of this application, the communication apparatus may be a non-access point multi-link device, a first collocated access point multi-link device, a second collocated access point multi-link device, or a non-collocated access point multi-link device, or may be a module (such as a chip) used in the non-access point multi-link device, the first collocated access point multi-link device, the second collocated access point multi-link device, or the non-collocated access point multi-link device.

The communication apparatus 600 shown in FIG. 6 includes a processing unit 610 and a transceiver unit 620. The communication apparatus 600 is configured to implement functions of a non-access point multi-link device, a first collocated access point multi-link device, a second collocated access point multi-link device, or a non-collocated access point multi-link device in the foregoing method embodiments.

The transceiver unit 620 has a transceiver function or an input/output function. When the transceiver unit 620 has a transceiver function, the transceiver unit 620 may be a transceiver, and may implement receiving and sending of a data signal or a control signal on an air interface. When the transceiver unit 620 has an input/output function, the transceiver unit 620 may be an input/output interface of a chip in the communication apparatus.

When the communication apparatus 600 is configured to implement functions of the non-access point multi-link device in the foregoing method embodiments, the processing unit 610 is configured to control the transceiver unit 620 to: send/output a first request message to a first collocated access point multi-link device in a non-collocated access point multi-link device, where the first request message includes identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; and receive/input a first response message, where the first response message includes a first association identifier allocated by the second collocated access point multi-link device to the non-access point multi-link device, and the first association identifier has not been allocated by the second collocated access point multi-link device before.

In a possible implementation method, that the processing unit 610 is configured to control the transceiver unit 620 to receive/input the first response message specifically includes: configured to control the transceiver unit 620 to receive/input the first response message from the first collocated access point multi-link device; or configured to control the transceiver unit 620 to receive/input the first response message from the second collocated access point multi-link device.

In a possible implementation method, the first request message is a multi-link reconfiguration request message, and the first response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In a possible implementation method, the first request message further includes identification information of the first collocated access point multi-link device and identification information of a second link in the first collocated access point multi-link device, the first request message is further used to request to establish the second link, and the second link is a link between the non-access point multi-link device and the first collocated access point multi-link device.

In a possible implementation method, that the processing unit 610 is configured to control the transceiver unit 620 to receive/input the first response message specifically includes: configured to control the transceiver unit 620 to receive/input the first response message from the first collocated access point multi-link device, where the first response message further includes a second association identifier allocated by the first collocated access point multi-link device to the non-access point multi-link device, and the second association identifier has not been allocated by the first collocated access point multi-link device before.

In a possible implementation method, the first request message is an association request message, and the first response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In a possible implementation method, that the processing unit 610 is configured to control the transceiver unit 620 to receive/input the first response message specifically includes: configured to control the transceiver unit 620 to receive/input the first response message from the second collocated access point multi-link device.

In a possible implementation method, the processing unit 610 is further configured to control the transceiver unit 620 to receive/input a second response message from the first collocated access point multi-link device, where the second response message includes a second association identifier allocated by the first collocated access point multi-link device to the non-access point multi-link device, and the second association identifier has not been allocated by the first collocated access point multi-link device before.

In a possible implementation method, the first request message further includes identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

In a possible implementation method, that the processing unit 610 is configured to control the transceiver unit 620 to receive/input the first response message specifically includes: configured to control the transceiver unit 620 to receive/input the first response message from the first collocated access point multi-link device, where the first response message further includes a third association identifier allocated by the third collocated access point multi-link device to the non-access point multi-link device, and the third association identifier has not been allocated by the third collocated access point multi-link device before.

In a possible implementation method, the first request message is a multi-link reconfiguration request message, and the first response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

In a possible implementation method, that the processing unit 610 is configured to control the transceiver unit 620 to receive/input the first response message specifically includes: configured to control the transceiver unit 620 to receive/input the first response message from the second collocated access point multi-link device.

In a possible implementation method, the processing unit 610 is further configured to control the transceiver unit 620 to receive/input a third response message from the third collocated access point multi-link device, where the third response message includes a third association identifier allocated by the third collocated access point multi-link device to the non-access point multi-link device, and the third association identifier has not been allocated by the third collocated access point multi-link device before.

When the communication apparatus 600 is configured to implement functions of the first collocated access point multi-link device in the foregoing method embodiments, the processing unit 610 is configured to control the transceiver unit 620 to: receive/input a first request message from a non-access point multi-link device, where the first request message includes identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; send/output a second request message to the second collocated access point multi-link device, where the second request message includes identification information of the non-access point multi-link device, the identification information of the second collocated access point multi-link device, and the identification information of the first link, and the second request message is used to request to allocate an association identifier to the non-access point multi-link device; receive/input a first association identifier allocated by the second collocated access point multi-link device to the non-access point multi-link device, where the first association identifier has not been allocated by the second collocated access point multi-link device before; and send/output a first response message to the non-access point multi-link device, where the first response message includes the first association identifier.

In a possible implementation method, that the processing unit 610 is configured to control the transceiver unit 620 to send/output the second request message to the second collocated access point multi-link device specifically includes: configured to control the transceiver unit 620 to send/output the second request message to the second collocated access point multi-link device through an access point multi-link device medium access control layer in the non-collocated access point multi-link device.

In a possible implementation method, the first request message is a multi-link reconfiguration request message, and the first response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In a possible implementation method, the first request message further includes identification information of the first collocated access point multi-link device and identification information of a second link in the first collocated access point multi-link device, the first request message is further used to request to establish the second link, and the second link is a link between the non-access point multi-link device and the first collocated access point multi-link device.

In a possible implementation method, the processing unit 610 is further configured to allocate a second association identifier to the non-access point multi-link device, where the second association identifier has not been allocated by the first collocated access point multi-link device before, where the first response message further includes the second association identifier.

In a possible implementation method, the first request message is an association request message, and the first response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In a possible implementation method, the first request message further includes identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

In a possible implementation method, the processing unit 610 is further configured to control the transceiver unit 620 to: send/output a third request message to the third collocated access point multi-link device, where the third request message includes the identification information of the non-access point multi-link device, the identification information of the third collocated access point multi-link device, and the identification information of the third link, and the third request message is used to request to allocate an association identifier to the non-access point multi-link device; and receive/input a third association identifier allocated by the third collocated access point multi-link device to the non-access point multi-link device, where the first response message further includes the third association identifier.

In a possible implementation method, the first request message is a multi-link reconfiguration request message, and the first response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

When the communication apparatus 600 is configured to implement functions of the second collocated access point multi-link device in the foregoing method embodiments, the processing unit 610 is configured to: control the transceiver unit 620 to receive/input a second request message from a first collocated access point multi-link device in the non-collocated access point multi-link device, where the second request message includes identification information of a non-access point multi-link device, identification information of the second collocated access point multi-link device, and identification information of a first link in the second collocated access point multi-link device, and the second request message is used to request to allocate an association identifier to the non-access point multi-link device; allocate a first association identifier to the non-access point multi-link device; and control the transceiver unit 620 to send/output the first association identifier to the non-access point multi-link device or the first collocated access point multi-link device.

When the communication apparatus 600 is configured to implement functions of the non-collocated access point multi-link device in the foregoing method embodiments, the processing unit 610 is configured to: control the transceiver unit 620 to receive/input a request message from a non-access point multi-link device through a first collocated access point multi-link device in the non-collocated access point multi-link device, where the request message includes identification information of a second collocated access point multi-link device in the non-collocated access point multi-link device and identification information of a first link in the second collocated access point multi-link device, the request message is used to request to establish the first link, and the first link is a link between the non-access point multi-link device and the second collocated access point multi-link device; allocate a first association identifier to the non-access point multi-link device, where the first association identifier is used by the second collocated access point multi-link device to uniquely identify the non-access point multi-link device, and the first association identifier has not been allocated by the second collocated access point multi-link device before; and control the transceiver unit 620 to send/output a response message to the non-access point multi-link device, where the response message includes the first association identifier.

In a possible implementation method, the request message is a multi-link reconfiguration request message, and the response message is a multi-link reconfiguration response message, where the multi-link reconfiguration response message includes a frame body of an association response message, and an association identifier field in the frame body includes the first association identifier; or the multi-link reconfiguration response message includes an association identifier element, and the association identifier element includes the first association identifier.

In a possible implementation method, the request message further includes identification information of the first collocated access point multi-link device and identification information of a second link in the first collocated access point multi-link device, the request message is further used to request to establish the second link, and the second link is a link between the non-access point multi-link device and the first collocated access point multi-link device.

In a possible implementation method, the processing unit 610 is further configured to allocate a second association identifier to the non-access point multi-link device, where the second association identifier is used by the first collocated access point multi-link device to uniquely identify the non-access point multi-link device, and the second association identifier has not been allocated by the first collocated access point multi-link device before, where the response message further includes the second association identifier.

In a possible implementation method, the request message is an association request message, and the response message is an association response message, where an association identifier field in the association response message includes the first association identifier, and a multi-link element in the association response message includes the second association identifier; or the association response message includes two multi-link elements, and the two multi-link elements respectively include the first association identifier and the second association identifier; or the association response message includes two association identifier elements, and the two association identifier elements respectively include the first association identifier and the second association identifier.

In a possible implementation method, the first association identifier is further used by the first collocated access point multi-link device to uniquely identify the non-access point multi-link device.

In a possible implementation method, the first association identifier has not been allocated by the first collocated access point multi-link device before; or the first association identifier has not been allocated by any collocated access point multi-link device in the non-collocated access point multi-link device before.

In a possible implementation method, the request message further includes identification information of a third collocated access point multi-link device in the non-collocated access point multi-link device and identification information of a third link in the third collocated access point multi-link device, the request message is further used to request to establish the third link, and the third link is a link between the non-access point multi-link device and the third collocated access point multi-link device.

In a possible implementation method, the processing unit 610 is further configured to allocate a third association identifier to the non-access point multi-link device, where the third association identifier is used by the third collocated access point multi-link device to uniquely identify the non-access point multi-link device, and the third association identifier has not been allocated by the third collocated access point multi-link device before, where the response message further includes the third association identifier.

In a possible implementation method, the request message is a multi-link reconfiguration request message, and the response message is a multi-link reconfiguration response message, where the multi-link reconfiguration response message includes a frame body of an association response message and a multi-link element, an association identifier field in the frame body includes the first association identifier, and the multi-link element includes the third association identifier; or the multi-link reconfiguration response message includes two multi-link elements, and the two multi-link elements respectively include the first association identifier and the third association identifier; or the multi-link reconfiguration response message includes two association identifier elements, and the two association identifier elements respectively include the first association identifier and the third association identifier.

In a possible implementation method, the first association identifier is further used by the third collocated access point multi-link device to uniquely identify the non-access point multi-link device.

In a possible implementation method, the first association identifier has not been allocated by the third collocated access point multi-link device before; or the first association identifier has not been allocated by any collocated access point multi-link device in the non-collocated access point multi-link device before.

For more detailed descriptions about the processing unit 610 and the transceiver unit 620, directly refer to related descriptions in the foregoing method embodiments. Details are not described herein again.

The communication apparatus 700 shown in FIG. 7 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, store input data required by the processor 710 to run the instructions, or store data generated after the processor 710 runs the instructions.

When the communication apparatus 700 is configured to implement the foregoing method embodiments, the processor 710 is configured to implement a function of the processing unit 610, and the interface circuit 720 is configured to implement a function of the transceiver unit 620.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instruction may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a non-access point multi-link device, a first collocated access point multi-link device, a second collocated access point multi-link device, or a non-collocated access point multi-link device. Certainly, the processor and the storage medium may also exist in the access network device or the terminal as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and runs on a target architecture. When the computer programs or instructions are loaded and executed on a computer, all or a part of the procedures or functions in embodiments of this application are performed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
sending, by a non-access point multi-link device, a first request message to a first collocated access point multi-link device in a non-collocated access point multi-link device, wherein the first request message comprises identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; and
receiving, by the non-access point multi-link device, a first response message, wherein the first response message comprises a first association identifier allocated by the second collocated access point multi-link device to the non-access point multi-link device.

2. The method according to claim 1, wherein receiving, by the non-access point multi-link device, the first response message comprises:
receiving, by the non-access point multi-link device, the first response message from the first collocated access point multi-link device; or
receiving, by the non-access point multi-link device, the first response message from the second collocated access point multi-link device.

3. The method according to claim 1 or 2, wherein the first association identifier has not been allocated by the second collocated access point multi-link device before.

4. The method according to any one of claims 1 to 3, wherein the first request message is a multi-link reconfiguration request message, and the first response message is a multi-link reconfiguration response message, wherein
the multi-link reconfiguration response message comprises a frame body of an association response message, and an association identifier field in the frame body comprises the first association identifier; or
the multi-link reconfiguration response message comprises an association identifier element, and the association identifier element comprises the first association identifier.

5. The method according to claim 1, wherein the first request message further comprises identification information of the first collocated access point multi-link device and identification information of a second link in the first collocated access point multi-link device, the first request message is further used to request to establish the second link, and the second link is a link between the non-access point multi-link device and the first collocated access point multi-link device.

6. The method according to claim 5, wherein receiving, by the non-access point multi-link device, the first response message comprises:
receiving, by the non-access point multi-link device, the first response message from the first collocated access point multi-link device, wherein the first response message further comprises a second association identifier allocated by the first collocated access point multi-link device to the non-access point multi-link device, and the second association identifier has not been allocated by the first collocated access point multi-link device before.

7. The method according to claim 6, wherein the first request message is an association request message, and the first response message is an association response message, wherein
an association identifier field in the association response message comprises the first association identifier, and a multi-link element in the association response message comprises the second association identifier; or
the association response message comprises two multi-link elements, and the two multi-link elements respectively comprise the first association identifier and the second association identifier; or
the association response message comprises two association identifier elements, and the two association identifier elements respectively comprise the first association identifier and the second association identifier.

8. The method according to claim 5, wherein receiving, by the non-access point multi-link device, the first response message comprises:
receiving, by the non-access point multi-link device, the first response message from the second collocated access point multi-link device.

9. The method according to claim 8, further comprising:
receiving, by the non-access point multi-link device, a second response message from the first collocated access point multi-link device, wherein the second response message comprises a second association identifier allocated by the first collocated access point multi-link device to the non-access point multi-link device, and the second association identifier has not been allocated by the first collocated access point multi-link device before.

10. The method according to claim 1, wherein the first request message further comprises identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

11. The method according to claim 10, wherein receiving, by the non-access point multi-link device, the first response message comprises:
receiving, by the non-access point multi-link device, the first response message from the first collocated access point multi-link device, wherein the first response message further comprises a third association identifier allocated by the third collocated access point multi-link device to the non-access point multi-link device, and the third association identifier has not been allocated by the third collocated access point multi-link device before.

12. The method according to claim 11, wherein the first request message is a multi-link reconfiguration request message, and the first response message is a multi-link reconfiguration response message, wherein
the multi-link reconfiguration response message comprises a frame body of an association response message and a multi-link element, an association identifier field in the frame body comprises the first association identifier, and the multi-link element comprises the third association identifier; or
the multi-link reconfiguration response message comprises two multi-link elements, and the two multi-link elements respectively comprise the first association identifier and the third association identifier; or
the multi-link reconfiguration response message comprises two association identifier elements, and the two association identifier elements respectively comprise the first association identifier and the third association identifier.

13. The method according to claim 10, wherein receiving, by the non-access point multi-link device, the first response message comprises:
receiving, by the non-access point multi-link device, the first response message from the second collocated access point multi-link device.

14. The method according to claim 13, further comprising:
receiving, by the non-access point multi-link device, a third response message from the third collocated access point multi-link device, wherein the third response message comprises a third association identifier allocated by the third collocated access point multi-link device to the non-access point multi-link device, and the third association identifier has not been allocated by the third collocated access point multi-link device before.

15. A communication method, comprising:
receiving, by a first collocated access point multi-link device in a non-collocated access point multi-link device, a first request message from a non-access point multi-link device, wherein the first request message comprises identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device;
sending, by the first collocated access point multi-link device, a second request message to the second collocated access point multi-link device, wherein the second request message comprises identification information of the non-access point multi-link device, the identification information of the second collocated access point multi-link device, and the identification information of the first link, and the second request message is used to request to allocate an association identifier to the non-access point multi-link device;
receiving, by the first collocated access point multi-link device, a first association identifier allocated by the second collocated access point multi-link device to the non-access point multi-link device; and
sending, by the first collocated access point multi-link device, a first response message to the non-access point multi-link device, wherein the first response message comprises the first association identifier.

16. The method according to claim 15, wherein sending, by the first collocated access point multi-link device, the second request message to the second collocated access point multi-link device comprises:
sending, by the first collocated access point multi-link device, the second request message to the second collocated access point multi-link device through an access point multi-link device medium access control layer in the non-collocated access point multi-link device.

17. The method according to claim 15 or 16, wherein the first association identifier has not been allocated by the second collocated access point multi-link device before.

18. The method according to any one of claims 15 to 17, wherein the first request message is a multi-link reconfiguration request message, and the first response message is a multi-link reconfiguration response message, wherein
the multi-link reconfiguration response message comprises a frame body of an association response message, and an association identifier field in the frame body comprises the first association identifier; or
the multi-link reconfiguration response message comprises an association identifier element, and the association identifier element comprises the first association identifier.

19. The method according to claim 15, wherein the first request message further comprises identification information of the first collocated access point multi-link device and identification information of a second link in the first collocated access point multi-link device, the first request message is further used to request to establish the second link, and the second link is a link between the non-access point multi-link device and the first collocated access point multi-link device.

20. The method according to claim 19, further comprising:
allocating, by the first collocated access point multi-link device, a second association identifier to the non-access point multi-link device, wherein the second association identifier has not been allocated by the first collocated access point multi-link device before, wherein
the first response message further comprises the second association identifier.

21. The method according to claim 20, wherein the first request message is an association request message, and the first response message is an association response message, wherein
an association identifier field in the association response message comprises the first association identifier, and a multi-link element in the association response message comprises the second association identifier; or
the association response message comprises two multi-link elements, and the two multi-link elements respectively comprise the first association identifier and the second association identifier; or
the association response message comprises two association identifier elements, and the two association identifier elements respectively comprise the first association identifier and the second association identifier.

22. The method according to claim 15, wherein the first request message further comprises identification information of a third collocated access point multi-link device in the non-collocated access point multi-link device and identification information of a third link in the third collocated access point multi-link device, the first request message is further used to request to establish the third link, and the third link is a link between the non-access point multi-link device and the third collocated access point multi-link device.

23. The method according to claim 22, further comprising:
sending, by the first collocated access point multi-link device, a third request message to the third collocated access point multi-link device, wherein the third request message comprises the identification information of the non-access point multi-link device, the identification information of the third collocated access point multi-link device, and the identification information of the third link, and the third request message is used to request to allocate an association identifier to the non-access point multi-link device; and
receiving, by the first collocated access point multi-link device, a third association identifier allocated by the third collocated access point multi-link device to the non-access point multi-link device, wherein
the first response message further comprises the third association identifier.

24. The method according to claim 23, wherein the first request message is a multi-link reconfiguration request message, and the first response message is a multi-link reconfiguration response message, wherein
the multi-link reconfiguration response message comprises a frame body of an association response message and a multi-link element, an association identifier field in the frame body comprises the first association identifier, and the multi-link element comprises the third association identifier; or
the multi-link reconfiguration response message comprises two multi-link elements, and the two multi-link elements respectively comprise the first association identifier and the third association identifier; or
the multi-link reconfiguration response message comprises two association identifier elements, and the two association identifier elements respectively comprise the first association identifier and the third association identifier.

25. A communication method, comprising:
receiving, by a non-collocated access point multi-link device, a request message from a non-access point multi-link device through a first collocated access point multi-link device in the non-collocated access point multi-link device, wherein the request message comprises identification information of a second collocated access point multi-link device in the non-collocated access point multi-link device and identification information of a first link in the second collocated access point multi-link device, the request message is used to request to establish the first link, and the first link is a link between the non-access point multi-link device and the second collocated access point multi-link device;
allocating, by the non-collocated access point multi-link device, a first association identifier to the non-access point multi-link device, wherein the first association identifier is used by the second collocated access point multi-link device to uniquely identify the non-access point multi-link device; and
sending, by the non-collocated access point multi-link device, a response message to the non-access point multi-link device, wherein the response message comprises the first association identifier.

26. The method according to claim 25, wherein the first association identifier has not been allocated by the second collocated access point multi-link device before.

27. The method according to claim 25 or 26, wherein the request message is a multi-link reconfiguration request message, and the response message is a multi-link reconfiguration response message, wherein
the multi-link reconfiguration response message comprises a frame body of an association response message, and an association identifier field in the frame body comprises the first association identifier; or
the multi-link reconfiguration response message comprises an association identifier element, and the association identifier element comprises the first association identifier.

28. The method according to claim 25, wherein the request message further comprises identification information of the first collocated access point multi-link device and identification information of a second link in the first collocated access point multi-link device, the request message is further used to request to establish the second link, and the second link is a link between the non-access point multi-link device and the first collocated access point multi-link device.

29. The method according to claim 28, further comprising:
allocating, by the non-collocated access point multi-link device, a second association identifier to the non-access point multi-link device, wherein the second association identifier is used by the first collocated access point multi-link device to uniquely identify the non-access point multi-link device, and the second association identifier has not been allocated by the first collocated access point multi-link device before, wherein
the response message further comprises the second association identifier.

30. The method according to claim 29, wherein the request message is an association request message, and the response message is an association response message, wherein
an association identifier field in the association response message comprises the first association identifier, and a multi-link element in the association response message comprises the second association identifier; or
the association response message comprises two multi-link elements, and the two multi-link elements respectively comprise the first association identifier and the second association identifier; or
the association response message comprises two association identifier elements, and the two association identifier elements respectively comprise the first association identifier and the second association identifier.

31. The method according to claim 28, wherein the first association identifier is further used by the first collocated access point multi-link device to uniquely identify the non-access point multi-link device.

32. The method according to claim 31, wherein the first association identifier has not been allocated by the first collocated access point multi-link device before; or
the first association identifier has not been allocated by any collocated access point multi-link device in the non-collocated access point multi-link device before.

33. The method according to claim 25, wherein the request message further comprises identification information of a third collocated access point multi-link device in the non-collocated access point multi-link device and identification information of a third link in the third collocated access point multi-link device, the request message is further used to request to establish the third link, and the third link is a link between the non-access point multi-link device and the third collocated access point multi-link device.

34. The method according to claim 33, further comprising:
allocating, by the non-collocated access point multi-link device, a third association identifier to the non-access point multi-link device, wherein the third association identifier is used by the third collocated access point multi-link device to uniquely identify the non-access point multi-link device, and the third association identifier has not been allocated by the third collocated access point multi-link device before, wherein
the response message further comprises the third association identifier.

35. The method according to claim 34, wherein the request message is a multi-link reconfiguration request message, and the response message is a multi-link reconfiguration response message, wherein
the multi-link reconfiguration response message comprises a frame body of an association response message and a multi-link element, an association identifier field in the frame body comprises the first association identifier, and the multi-link element comprises the third association identifier; or
the multi-link reconfiguration response message comprises two multi-link elements, and the two multi-link elements respectively comprise the first association identifier and the third association identifier; or
the multi-link reconfiguration response message comprises two association identifier elements, and the two association identifier elements respectively comprise the first association identifier and the third association identifier.

36. The method according to claim 33, wherein the first association identifier is further used by the third collocated access point multi-link device to uniquely identify the non-access point multi-link device.

37. The method according to claim 36, wherein the first association identifier has not been allocated by the third collocated access point multi-link device before; or
the first association identifier has not been allocated by any collocated access point multi-link device in the non-collocated access point multi-link device before.

38. A communication apparatus, comprising a processor and an interface circuit, wherein the processor is configured to: communicate with another apparatus through the interface circuit, and perform the method according to any one of claims 1 to 14, the method according to any one of claims 15 to 24, or the method according to any one of claims 25 to 37.

39. A communication apparatus, comprising a processor coupled to a memory, wherein the processor is configured to invoke a program stored in the memory, to perform the method according to any one of claims 1 to 14, the method according to any one of claims 15 to 24, or the method according to any one of claims 25 to 37.

40. A communication apparatus, comprising a processor and a memory, wherein the memory is configured to store computer instructions, and when the communication apparatus runs, the processor performs the method according to any one of claims 1 to 14, the method according to any one of claims 15 to 24, or the method according to any one of claims 25 to 37.

41. A computer-readable storage medium, wherein the storage medium stores a computer program or instructions, and when the computer program or the instructions are executed by a communication apparatus, the method according to any one of claims 1 to 14, the method according to any one of claims 15 to 24, or the method according to any one of claims 25 to 37 is implemented.

42. A communication system, comprising:
a first collocated access point multi-link device in a non-collocated access point multi-link device, configured to: receive a first request message from a non-access point multi-link device, wherein the first request message comprises identification information of a second collocated access point multi-link device in the non-collocated access point multi-link device and identification information of a first link in the second collocated access point multi-link device, the first request message is used to request to establish the first link, and the first link is a link between the non-access point multi-link device and the second collocated access point multi-link device; send a second request message to the second collocated access point multi-link device, wherein the second request message comprises identification information of the non-access point multi-link device, the identification information of the second collocated access point multi-link device, and the identification information of the first link, and the second request message is used to request to allocate an association identifier to the non-access point multi-link device; receive a first association identifier allocated by the second collocated access point multi-link device to the non-access point multi-link device; and send a first response message to the non-access point multi-link device, wherein the first response message comprises the first association identifier; and
the second collocated access point multi-link device, configured to: receive the second request message; allocate the first association identifier to the non-access point multi-link device; and send the first association identifier to the first collocated access point multi-link device.
